# EUROPEAN PATENT APPLICATION

(11) **EP 4 848 396 A1**
(43) Date of publication of application: **02.12.2026**
(21) Application number: 25761901.5
(22) Date of filing: 26.02.2025
(51) Int. Cl.: H01M 10/0567, H01M 4/36, H01M 4/38, H01M 4/48, H01M 4/587, H01M 10/052, H01M 10/054, H01M 10/0568, H01M 10/0569

(54) **NONAQUEOUS ELECTROLYTE SOLUTION, NONAQUEOUS ELECTROLYTE BATTERY, AND METHOD FOR PRODUCING NONAQUEOUS ELECTROLYTE BATTERY**

(30) Priority: 28.02.2024 JP 2024028752
(71) Applicant: Central Glass Company, Limited, Ube-shi, Yamaguchi 755-0001 (JP)
(72) Inventor: KAWAHARA, Kei, Tokyo 101-0054 (JP); IMURA, Wataru, Tokyo 101-0054 (JP); TAKAHASHI, Mikihiro, Tokyo 101-0054 (JP); MORINAKA, Takayoshi, Tokyo 101-0054 (JP)
(74) Representative: Manitz Finsterwald Patent- und Rechtsanwaltspartnerschaft mbB
(86) International application number: PCT/JP2025/006679
(87) International publication number: WO 2025/183006

(57) **Abstract**

Provided are a nonaqueous electrolyte solution for a nonaqueous electrolyte solution battery that has at least one of a positive electrode containing a layered-rocksalt-type positive electrode active material, a positive electrode containing an olivine-type positive electrode active material, a positive electrode containing a spinel-type positive electrode active material, a negative electrode containing a graphite negative electrode active material, a negative electrode containing a Si-containing negative electrode active material and graphite, or a negative electrode containing a titanium-containing oxide negative electrode active material, each having the active material layer densities of the specified values or higher described in the description, the nonaqueous electrolyte solution containing (I) a solute, (II) a nonaqueous organic solvent, and (III) a compound represented by the general formula (1) described in the description, a nonaqueous electrolyte solution battery having the nonaqueous electrolyte solution and at least one of the electrodes, and a method for producing the nonaqueous electrolyte solution battery.

## Description

### TECHNICAL FIELD

The present disclosure relates to a nonaqueous electrolyte solution for a nonaqueous electrolyte solution battery having an electrode having an active material layer with a density of a specified value or higher, a nonaqueous electrolyte solution battery having the electrode and the nonaqueous electrolyte solution, and a method for producing a nonaqueous electrolyte solution battery.

### BACKGROUND ART

In recent years, in order to increase the capacity of a nonaqueous electrolyte solution battery, the densities of the positive electrode active material layer and the negative electrode active material layer of the nonaqueous electrolyte solution battery (hereinafter, the densities may be collectively referred to as "electrode active material layer density") are increasing.

Here, a lithium secondary battery in which a compound in which a halogen group is bonded to at least one selected from the group consisting of a phosphite ester, a phosphate ester, a borate ester, a sulfate ester, and sulfite ester is contained in the solvent of the nonaqueous electrolyte solution is disclosed in order to obtain a lithium secondary battery having excellent cycle characteristics while sufficiently suppressing the reaction between the nonaqueous electrolyte solution and the negative electrode during charge and discharge (PTL 1).

### CITATION LIST

### PATENT LITERATURE

PTL 1: JP2002-025609A

### SUMMARY OF INVENTION

### TECHNICAL PROBLEM

It has been found through investigations by the inventors that, when the density of an electrode active material layer is increased, particularly when a nonaqueous electrolyte solution battery has an electrode configuration including at least one of a positive electrode containing a layered-rocksalt-type positive electrode active material and having a positive electrode active material layer with a density of 2.50 g/cm³ or more, a positive electrode containing an olivine-type positive electrode active material and having a positive electrode active material layer with a density of 1.50 g/cm³ or more, a positive electrode containing a spinel-type positive electrode active material and having a positive electrode active material layer with a density of 2.00 g/cm³ or more, a negative electrode containing a graphite negative electrode active material and having a negative electrode active material layer with a density of 1.00 g/cm³ or more, a negative electrode containing a Si-containing negative electrode active material and graphite and having a negative electrode active material layer with a density of 1.00 g/cm³ or more, or a negative electrode containing a titanium-containing oxide negative electrode active material and having a negative electrode active material layer with a density of 1.50 g/cm³ or more, the wettability of the electrode surface by the nonaqueous electrolyte solution decreases.

Therefore, an object of the present disclosure is to provide a nonaqueous electrolyte solution capable of improving the wettability of the nonaqueous electrolyte solution on the surface of an electrode even when the electrode has an electrode active material layer with a density of a specified value or higher, a nonaqueous electrolyte solution battery having the nonaqueous electrolyte solution and at least one electrode selected from the group consisting of the above-described positive electrodes and negative electrodes, and a method for producing the nonaqueous electrolyte solution battery.

### SOLUTION TO PROBLEM

That is, the present invention is as follows.
[1] A nonaqueous electrolyte solution for a nonaqueous electrolyte solution battery having at least one of the following:
   a positive electrode containing a layered-rocksalt-type positive electrode active material and having a positive electrode active material layer with a density of 2.50 g/cm³ or more;
   a positive electrode containing an olivine-type positive electrode active material and having a positive electrode active material layer with a density of 1.50 g/cm³ or more;
   a positive electrode containing a spinel-type positive electrode active material and having a positive electrode active material layer with a density of 2.00 g/cm³ or more;
   a negative electrode containing a graphite negative electrode active material and having a negative electrode active material layer with a density of 1.00 g/cm³ or more;
   a negative electrode containing a Si-containing negative electrode active material and graphite and having a negative electrode active material layer with a density of 1.00 g/cm³ or more; or
   a negative electrode containing a titanium-containing oxide negative electrode active material and having a negative electrode active material layer with a density of 1.50 g/cm³ or more,
   in which the nonaqueous electrolyte solution contains:
      (I) a solute;
      (II) a nonaqueous organic solvent; and
      (III) a compound represented by the following general formula (1).

   [Chem. 1] P(OR)₃ (1)

   [In the general formula (1), R's are each independently an alkyl group, a cycloalkyl group, an alkenyl group, an alkynyl group, or an aryl group.]
[2] The nonaqueous electrolyte solution according to [1], in which the nonaqueous electrolyte solution battery has at least one of the following:
   a positive electrode containing a layered-rocksalt-type positive electrode active material and having a positive electrode active material layer with a density of 2.50 to 5 g/cm³;
   a positive electrode containing an olivine-type positive electrode active material and having a positive electrode active material layer with a density of 1.50 to 3 g/cm³;
   a positive electrode containing a spinel-type positive electrode active material and having a positive electrode active material layer with a density of 2.00 to 4 g/cm³;
   a negative electrode containing a graphite negative electrode active material and having a negative electrode active material layer with a density of 1.00 to 3 g/cm³;
   a negative electrode containing a Si-containing negative electrode active material and graphite and having a negative electrode active material layer with a density of 1.00 to 3 g/cm³; or
   a negative electrode containing a titanium-containing oxide negative electrode active material and having a negative electrode active material layer with a density of 1.50 to 3 g/cm³.
[3] The nonaqueous electrolyte solution according to [1] or [2] in which R in the general formula (1) is an alkyl group having a fluorine atom.
[4] The nonaqueous electrolyte solution according to any one of [1] to [3], in which a content of the (III) is 0.015 to 9% by mass based on a total amount of the nonaqueous electrolyte solution.
[5] The nonaqueous electrolyte solution according to any one of [1] to [4], in which the (III) is at least one selected from the group consisting of tris(1,1,1,3,3,3-hexafluoro-2-propyl) phosphite, tris(2,2,2-trifluoroethyl) phosphite, tris(2,2-difluoroethyl) phosphite, and tris(2-fluoroethyl) phosphite.
[6] The nonaqueous electrolyte solution according to any one of [1] to [5], in which the (I) is at least one selected from the group consisting of LiPF₆, LiBF₄, LiSbF₆, LiAsF₆, LiClO₄, LiN(FSO₂)₂, LiAlO₂, LiAlCl₄, LiCl, and Lil.
[7] The nonaqueous electrolyte solution according to any one of [1] to [5], in which the (I) is at least one selected from the group consisting of NaPF₆, NaBF₄, NaSbF₆, NaAsF₆, NaClO₄, NaN(FSO₂)₂, NaAlO₂, NaAlCl₄, NaCl, and Nal.
[8] The nonaqueous electrolyte solution according to any one of [1] to [7], in which the (II) contains at least one selected from the group consisting of a cyclic ester, an acyclic ester, a cyclic ether, an acyclic ether, a sulfone compound, a sulfoxide compound, and an ionic liquid.
[9] The nonaqueous electrolyte solution according to [8], in which the cyclic ester contains a cyclic carbonate.
[10] The nonaqueous electrolyte solution according to [9], in which the cyclic carbonate contains at least one selected from the group consisting of ethylene carbonate and propylene carbonate.
[11] The nonaqueous electrolyte solution according to any one of [8] to [10], in which the acyclic ester contains an acyclic carbonate.
[12] The nonaqueous electrolyte solution according to [11,] in which the acyclic carbonate contains at least one selected from the group consisting of ethyl methyl carbonate, dimethyl carbonate, diethyl carbonate, and methyl propyl carbonate.
[13] The nonaqueous electrolyte solution according to any one of [8] to [12], in which the cyclic ether contains at least one selected from the group consisting of tetrahydrofuran, 2-methyltetrahydrofuran, furan, tetrahydropyran, 1,3-dioxane, 1,4-dioxane, 1,3-dioxolane, and trioxane.
[14] The nonaqueous electrolyte solution according to any one of [8] to [13], in which the acyclic ether contains at least one selected from the group consisting of diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.
[15] The nonaqueous electrolyte solution according to any one of [1] to [14], which further contains at least one selected from the group consisting of cyclohexylbenzene, cyclohexyl fluorobenzene, biphenyl, 2-fluorobiphenyl, tert-butylbenzene, tert-amylbenzene, 2-fluorotoluene, fluorobenzene, difluoroanisole, vinylene carbonate, an oligomer of vinylene carbonate (a number-average molecular weight in terms of polystyrene of 170 to 5,000), vinylethylene carbonate, divinylethylene carbonate, fluoroethylene carbonate, ethynyl ethylene carbonate, trans-difluoroethylene carbonate, methyl propargyl carbonate, ethyl propargyl carbonate, dipropargyl carbonate, dimethyl vinylene carbonate, dimethyl dicarbonate, bis(1,1,1,3,3,3-hexafluoro-1-propyl) carbonate, bis(2,2,2-trifluoroethyl) carbonate, 1,6-diisocyanatohexane, maleic anhydride, succinic anhydride, 1,4-dioxane-2,6-dione, glutaric anhydride, methanedisulfonic anhydride, 1,2-ethanedisulfonic anhydride, methanesulfonic anhydride, 2-sulfobenzoic anhydride, 1,3-propanedisulfonic anhydride, 1,3-propanesultone, 1,3-propenesultone, 1,4-butanesultone, 2,4-butanesultone, 1,3,2-dioxathiolane-2,2-dioxide, 4-propyl-1,3,2-dioxathiolane-2,2-dioxide, 1,3-dithiolane-1,1,3,3-tetraoxide, 1,3-dithiane-1,1,3,3-tetraoxide, 1,2-oxathiolan-5-one-2,2-dioxide, methylene methanedisulfonate, dimethylene methanedisulfonate, trimethylene methanedisulfonate, methyl methanesulfonate, methanesulfonyl fluoride, ethenesulfonyl fluoride, N,N'-carbonylbis(N-methylsulfamoyl fluoride), difluoro(picolinato)borate, phenyl difluorophosphate, tripropargyl phosphate, tetrafluoro(picolinato)phosphate, (ethoxy)pentafluorocyclotriphosphazene, succinonitrile, methyldifluorovinylsilane, methylfluorodivinylsilane, dimethyldivinylsilane, trivinylmethylsilane, trivinylfluorosilane, tetravinylsilane, tris(trimethylsilyl)borate, tris(trimethylsilyl)phosphate, 1,3-dimethyl-1,3-divinyl-1,3-di(1,1,1,3,3,3-hexafluoroisopropyl)disiloxane, a fluorosulfonate salt, a trifluoromethanesulfonate salt, a pentafluoroethanesulfonate salt, a nonafluorobutanesulfonate salt, a monomethyl sulfate salt, a monoethyl sulfate salt, a bis(trifluoromethanesulfonyl)imide salt, a bis(pentafluoroethanesulfonyl)imide salt, a (trifluoromethanesulfonyl)(nonafluorobutanesulfonyl)imide salt, a (trifluoromethanesulfonyl)(pentafluoroethanesulfonyl)imide salt, a (trifluoromethanesulfonyl)(fluorosulfonyl)imide salt, a (pentafluoroethanesulfonyl)(fluorosulfonyl)imide salt, a (difluorophosphoryl)(fluorosulfonyl)imide salt, a (difluorophosphoryl)(trifluoromethanesulfonyl)imide salt, a bis(difluorophosphoryl)imide salt, (fluorosulfonyl)(lithium carbonyloxymethanesulfonate)imide, a (fluorosulfonyl)(carbonyldi(2-propenyl)phosphoryl)imide salt, a (carbonyldi(propargyl)phosphoryl)imide salt, a monofluorophosphate salt, a difluorophosphate salt, a tetrafluoro(malonato)phosphate salt, a tris(oxalato)phosphate salt, a difluorobis(oxalato)phosphate salt, a tetrafluorooxalatophosphate salt, a bis(oxalato)borate salt, a difluorooxalatoborate salt, a difluoro(malonato)borate salt, a tris(trifluoromethanesulfonyl)methide salt, a tris(fluorosulfonyl)methide salt, an acrylate salt, a methacrylate salt, a nitrate salt, a nitrite salt, hexafluoroisopropanol, and trifluoroethanol.
[16] A nonaqueous electrolyte solution battery having at least the following:
   a positive electrode;
   a negative electrode; and
   the nonaqueous electrolyte solution according to any one of [1] to [15],
   in which at least one of the positive electrode or the negative electrode is one of the following electrodes:
      a positive electrode containing a layered-rocksalt-type positive electrode active material and having a positive electrode active material layer with a density of 2.50 g/cm³ or more;
      a positive electrode containing an olivine-type positive electrode active material and having a positive electrode active material layer with a density of 1.50 g/cm³ or more;
      a positive electrode containing a spinel-type positive electrode active material and having a positive electrode active material layer with a density of 2.00 g/cm³ or more;
      a negative electrode containing a graphite negative electrode active material and having a negative electrode active material layer with a density of 1.00 g/cm³ or more;
      a negative electrode containing a Si-containing negative electrode active material and graphite and having a negative electrode active material layer with a density of 1.00 g/cm³ or more; or
      a negative electrode containing a titanium-containing oxide negative electrode active material and having a negative electrode active material layer with a density of 1.50 g/cm³ or more.
[17] A method for producing a nonaqueous electrolyte solution battery, the method including:
   a step of impregnating, with a nonaqueous electrolyte solution, at least one of the following electrodes:
   a positive electrode containing a layered-rocksalt-type positive electrode active material and having a positive electrode active material layer with a density of 2.50 g/cm³ or more;
   a positive electrode containing an olivine-type positive electrode active material and having a positive electrode active material layer with a density of 1.50 g/cm³ or more;
   a positive electrode containing a spinel-type positive electrode active material and having a positive electrode active material layer with a density of 2.00 g/cm³ or more;
   a negative electrode containing a graphite negative electrode active material and having a negative electrode active material layer with a density of 1.00 g/cm³ or more;
   a negative electrode containing a Si-containing negative electrode active material and graphite and having a negative electrode active material layer with a density of 1.00 g/cm³ or more; or
   a negative electrode containing a titanium-containing oxide negative electrode active material and having a negative electrode active material layer with a density of 1.50 g/cm³ or more,
   in which the nonaqueous electrolyte solution contains:
      (I) a solute;
      (II) a nonaqueous organic solvent; and
      (III) a compound represented by the following general formula (1):

   [Chem. 2] P(OR)₃ (1)

[In the general formula (1), R's are each independently an alkyl group, a cycloalkyl group, an alkenyl group, an alkynyl group, or an aryl group.]

### ADVANTAGEOUS EFFECTS OF INVENTION

According to the present disclosure, a nonaqueous electrolyte solution capable of improving the wettability of the nonaqueous electrolyte solution on the surface of an electrode even when used in a nonaqueous electrolyte solution battery having an electrode configuration including an electrode having an active material layer with a density of a specified value or higher, a nonaqueous electrolyte solution battery having the electrode and the nonaqueous electrolyte solution, and a method for producing the nonaqueous electrolyte solution battery can be provided.

### DESCRIPTION OF EMBODIMENTS

The term "to" in the present description is used to mean that the numerical values indicated before and after "to" are included as a lower limit value and an upper limit value.

Hereinafter, the present disclosure will be described in detail, but the description of the constituent elements described below is an example of an embodiment of the present disclosure, and the present disclosure is not limited to these specific contents.

### 1. Nonaqueous Electrolyte Solution

The nonaqueous electrolyte solution of the present disclosure is a nonaqueous electrolyte solution for a nonaqueous electrolyte solution battery having at least one of a positive electrode containing a layered-rocksalt-type positive electrode active material and having a positive electrode active material layer with a density of 2.50 g/cm³ or more, a positive electrode containing an olivine-type positive electrode active material and having a positive electrode active material layer with a density of 1.50 g/cm³ or more, a positive electrode containing a spinel-type positive electrode active material and having a positive electrode active material layer with a density of 2.00 g/cm³ or more, a negative electrode containing a graphite negative electrode active material and having a negative electrode active material layer with a density of 1.00 g/cm³ or more, a negative electrode containing a Si-containing negative electrode active material and graphite and having a negative electrode active material layer with a density of 1.00 g/cm³ or more, or a negative electrode containing a titanium-containing oxide negative electrode active material and having a negative electrode active material layer with a density of 1.50 g/cm³ or more (hereinafter, these positive electrodes and negative electrodes are also referred to as "specific electrodes")
and contains
(I) a solute,
(II) a nonaqueous organic solvent, and
(III) a compound represented by the general formula (1).

### <(I) Solute>

The (I) solute (also referred to as "(I)") contained in the nonaqueous electrolyte solution of the present disclosure will be explained.

As the (I) solute, various solutes that have been employed in the field of such a nonaqueous electrolyte solution can be employed without particular limitation. Such a solute is preferably an ionic salt composed of a pair of a cation and an anion and is not particularly limited as long as the solute is present in an ionic state as a cation and an anion in a nonaqueous organic solvent, and various solutes can be used.

The solute is preferably, for example, an ionic salt composed of a pair of at least one cation selected from the group consisting of an alkali metal ion such as a lithium ion and a sodium ion, an alkaline earth metal ion, and quaternary ammonium and at least one anion selected from the group consisting of a hexafluorophosphate anion, a tetrafluoroborate anion, a hexafluoroantimonate anion, a hexafluoroarsenate anion, a perchlorate anion, a bis(fluorosulfonyl)imide anion, an aluminate anion, a tetrachloroaluminate anion, a chloride ion, and an iodide ion.

Suitable examples of the solute specifically include at least one selected from the group consisting of LiPF₆, LiBF₄, LiSbF₆, LiAsF₆, LiClO₄, LiN(FSO₂)₂, LiAlO₂, LiAlCl₄, LiCl, and LiI or at least one selected from the group consisting of NaPF₆, NaBF₄, NaSbF₆, NaAsF₆, NaClO₄, NaN(FSO₂)₂, NaAlO₂, NaAlClₐ, NaCl, and NaI.

Of these, in view of energy density, output characteristics, life, and the like of the nonaqueous electrolyte solution battery, the cation is preferably at least one selected from the group consisting of a lithium ion, a sodium ion, a potassium ion, a magnesium ion, and a quaternary ammonium cation, and the anion is preferably at least one selected from the group consisting of a hexafluorophosphate anion, a tetrafluoroborate anion, and a bis(fluorosulfonyl)imide anion.

In the nonaqueous electrolyte solution of the present disclosure, as (1), one type of compound may be used alone, or two or more types of compounds may be mixed and used in any combination at any ratio according to the application.

The concentration of (I) with respect to the total amount of the nonaqueous electrolyte solution is not particularly limited. For example, the lower limit of the concentration of (I) may be 0.5 mol/L or more, 0.7 mol/L or more, or 0.9 mol/L or more. The upper limit of the concentration of (I) may be 5 mol/L or less, 4 mol/L or less, or 2 mol/L or less. The concentration is preferably 0.5 mol/L or more because the ionic conductivity hardly decreases, and the cycle characteristic and the output characteristic of the nonaqueous electrolyte solution battery hardly deteriorate. On the other hand, the concentration is preferably 5 mol/L or less because the viscosity of the nonaqueous electrolyte solution hardly increases, and the ionic conductivity hardly decreases. Here, when two or more types are used as (I), the total concentration of the solutes is preferably within the above range.

The liquid temperature for dissolving (I) in (II) a nonaqueous organic solvent is not particularly limited but may be -20 to 80°C or 0 to 60°C.

Moreover, the cation of the solute is more preferably a lithium ion for use for a lithium ion battery application and is more preferably a sodium ion for use for a sodium ion battery application.

### <(II) Nonaqueous Organic Solvent>

The (II) nonaqueous organic solvent (also referred to as "(II)") contained in the nonaqueous electrolyte solution of the present disclosure will be explained. The type of the (II) nonaqueous organic solvent is not particularly limited, and any nonaqueous organic solvent can be used. Such a nonaqueous organic solvent preferably contains at least one selected from the group consisting of a cyclic ester, an acyclic ester, a cyclic ether, an acyclic ether, a sulfone compound, a sulfoxide compound, an amide compound, a nitrile compound, and an ionic liquid and more preferably contains at least one selected from the group consisting of a cyclic ester, an acyclic ester, a cyclic ether, an acyclic ether, a sulfone compound, a sulfoxide compound, and an ionic liquid. Here, the cyclic carbonate is a subordinate concept of the cyclic ester, and the acyclic carbonate is a subordinate concept of the acyclic ester.

Specific examples of the (II) nonaqueous organic solvent include the following nonaqueous organic solvents.

Examples of the cyclic ester include cyclic carbonates such as propylene carbonate (hereinafter, sometimes referred to as "PC"), ethylene carbonate (hereinafter, sometimes referred to as "EC"), and butylene carbonate, as well as γ-butyrolactone and γ-valerolactone.

Examples of the acyclic ester include acyclic carbonates such as diethyl carbonate (hereinafter, sometimes referred to as "DEC"), dimethyl carbonate (hereinafter, sometimes referred to as "DMC"), ethyl methyl carbonate (hereinafter, sometimes referred to as "EMC"), methyl propyl carbonate, ethyl propyl carbonate, methyl butyl carbonate, 2,2,2-trifluoroethyl methyl carbonate, 2,2,2-trifluoroethyl ethyl carbonate, 2,2,2-trifluoroethyl propyl carbonate, 1,1,1,3,3,3-hexafluoro-1-propyl methyl carbonate, 1,1,1,3,3,3-hexafluoro-1-propyl ethyl carbonate, and 1,1,1,3,3,3-hexafluoro-1-propyl propyl carbonate, as well as methyl acetate, ethyl acetate, methyl propionate, ethyl propionate (hereinafter sometimes referred to as "EP"), methyl 2-fluoropropionate, and ethyl 2-fluoropropionate.

Examples of the cyclic ether include tetrahydrofuran, 2-methyltetrahydrofuran, furan, tetrahydropyran, 1,3-dioxane, 1,4-dioxane, 1,3-dioxolane, and trioxane.

Examples of the acyclic ether include diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.

In addition, examples include sulfone compounds and sulfoxide compounds, such as dimethyl sulfoxide and sulfolane, N,N-dimethylformamide, acetonitrile, and propionitrile. In addition, an ionic liquid and the like can also be exemplified.

The cyclic ester may contain a cyclic carbonate, and the cyclic carbonate may contain at least one selected from the group consisting of ethylene carbonate and propylene carbonate.

The acyclic ester may contain an acyclic carbonate, and the acyclic carbonate may contain at least one selected from the group consisting of ethyl methyl carbonate, dimethyl carbonate, diethyl carbonate, and methyl propyl carbonate.

The cyclic ether may contain at least one selected from the group consisting of tetrahydrofuran, 2-methyltetrahydrofuran, furan, tetrahydropyran, 1,3-dioxane, 1,4-dioxane, 1,3-dioxolane, and trioxane.

The acyclic ether may contain at least one selected from the group consisting of diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.

In the nonaqueous electrolyte solution of the present disclosure, as (II), one type of compound may be used alone, or two or more types of compounds may be mixed and used in any combination at any ratio according to the application. Of these, from the viewpoint of the electrochemical stability against oxidation and reduction thereof and the chemical stability relating to heat or the reaction with the solute, in particular, at least one selected from the group consisting of PC, EC, DEC, DMC, and EMC is preferably contained.

For example, one or more types of cyclic carbonates having high permittivity and one or more types of acyclic carbonates or acyclic esters having low liquid viscosity are preferably contained as the nonaqueous organic solvents because the ionic conductivity of the electrolyte solution is increased. Specifically, one containing any of the following combinations is more preferable.
(1) A combination of EC and EMC,
(2) a combination of EC and DEC,
(3) a combination of EC, DMC, and EMC,
(4) a combination of EC, DEC, and EMC,
(5) a combination of EC, EMC, and EP,
(6) a combination of PC and DEC,
(7) a combination of PC and EMC,
(8) a combination of PC and EP,
(9) a combination of PC, DMC, and EMC,
(10) a combination of PC, DEC, and EMC,
(11) a combination of PC, DEC, and EP,
(12) a combination of PC, EC, and EMC,
(13) a combination of PC, EC, DMC, and EMC,
(14) a combination of PC, EC, DEC, and EMC, and
(15) a combination of PC, EC, EMC, and EP.

The concentration of the nonaqueous organic solvent in the present disclosure is not particularly limited as long as the nonaqueous organic solvent has a function as a nonaqueous organic solvent, but the concentration may be, for example, 40 to 99% by mass, preferably 50 to 95% by mass, and particularly preferably 70 to 93% by mass with respect to the total amount (100% by mass) of the nonaqueous electrolyte solution.

The cyclic carbonate content is not particularly limited and may be selected as desired as long as the effects of the present disclosure are not significantly impaired, but the content in the case where one type is used alone may be 3% by volume or more and more preferably 5% by volume or more in 100% by volume of the nonaqueous organic solvent. Within this range, a decrease in electric conductivity resulting from a decrease in permittivity of the nonaqueous electrolyte solution is avoided, and the large current discharge characteristics, the stability with respect to the negative electrode, and the cycle characteristics of the nonaqueous electrolyte solution battery are easily set in favorable ranges. The content may be 90% by volume or less, preferably 85% by volume or less, and more preferably 80% by volume or less. Within this range, the viscosity of the nonaqueous electrolyte solution can be maintained within an appropriate range, a decrease in ionic conductivity can be suppressed, and thus the load characteristics of the nonaqueous electrolyte solution battery are easily set in a favorable range.

Moreover, two or more types of cyclic carbonates can be used in any combination. One of preferable combinations is a combination of ethylene carbonate and propylene carbonate. In this case, the volume ratio of ethylene carbonate to propylene carbonate is preferably 99:1 to 40:60 and particularly preferably 95:5 to 50:50. Further, the amount of propylene carbonate in the entire nonaqueous organic solvent is not particularly limited and may be selected as desired as long as the effects of the present disclosure are not significantly impaired, but the amount may be 1% by volume or more, preferably 2% by volume or more, and more preferably 3% by volume or more, and may be 30% by volume or less, preferably 25% by volume or less, and more preferably 20% by volume or less. Propylene carbonate is preferably contained within this range because, for example, in a combination of ethylene carbonate and dialkyl carbonates, the low-temperature characteristics are more excellent while the characteristics of the combination of ethylene carbonate and a dialkyl carbonate are maintained.

One type of acyclic ester may be used alone, or two or more types thereof may be used in any combination and at any ratio.

The acyclic ester content is not particularly limited but may be 15% by volume or more, preferably 20% by volume or more, and more preferably 25% by volume or more, and may be 90% by volume or less, preferably 85% by volume or less, and more preferably 80% by volume or less, in 100% by volume of the nonaqueous organic solvent. When the acyclic ester content is within the above range, the viscosity of the nonaqueous electrolyte solution is set in an appropriate range, a decrease in ionic conductivity is suppressed, and thus the input/output characteristics and the charge-discharge rate characteristics of the nonaqueous electrolyte solution battery are easily set in favorable ranges. In addition, a decrease in electric conductivity resulting from a decrease in permittivity of the nonaqueous electrolyte solution is avoided, and the input/output characteristics and the charge/discharge rate characteristics of the nonaqueous electrolyte solution battery are easily set in favorable ranges.

Further, by combining ethylene carbonate at a specific content with a specific acyclic ester, the battery performance can be significantly improved.

For example, when dimethyl carbonate, ethyl methyl carbonate, or a mixture of dimethyl carbonate and ethyl methyl carbonate is selected as a specific acyclic ester, the ethylene carbonate content is not particularly limited and may be selected as desired as long as the effects of the present disclosure are not significantly impaired, but the content may be 5% by volume or more and preferably 10% by volume or more, and may be 45% by volume or less and preferably 40% by volume or less. The dimethyl carbonate content may be 20% by volume or more and preferably 30% by volume or more, and may be 50% by volume or less and preferably 45% by volume or less. The ethyl methyl carbonate content may be 20% by volume or more and preferably 30% by volume or more, and may be 50% by volume or less and preferably 45% by volume or less. When the contents are within the above ranges, the viscosity of the nonaqueous electrolyte solution is decreased while the low-temperature precipitation temperature of the electrolyte is decreased, the ionic conductivity is improved, and high input/output is easily obtained even at a low temperature.

The acyclic ether content is not particularly limited and may be selected as desired as long as the effects of the present disclosure are not significantly impaired, but the content may be 1% by volume or more, preferably 2% by volume or more, and more preferably 3% by volume or more, and may be 30% by volume or less, preferably 25% by volume or less, and more preferably 20% by volume or less in 100% by volume of the nonaqueous organic solvent. When the acyclic ether content is within the above range, it is easy to secure the effect of improving the ionic conductivity due to improvement in lithium ion dissociation degree by the acyclic ether and to a decrease in viscosity, for example, in the case of a lithium ion battery in which a cation is mainly lithium. When the negative electrode active material is a carbonaceous material, the phenomenon in which the acyclic ether is co-intercalated with lithium ions can be suppressed, and thus the input/output characteristics and the charge-discharge rate characteristics are easily set in appropriate ranges.

The sulfone compound content is not particularly limited and may be selected as desired, as long as the effects of the present disclosure are not significantly impaired, but the content may be 0.3% by volume or more, preferably 0.5% by volume or more, and more preferably 1% by volume or more, and may be 40% by volume or less, preferably 35% by volume or less, and more preferably 30% by volume or less in 100% by volume of the nonaqueous organic solvent. When the sulfone compound content is within the above range, the effect of improving the durability such as the cycle characteristics and the storage characteristics is easily obtained, the viscosity of the nonaqueous electrolyte solution can be set in an appropriate range, a decrease in electric conductivity can be avoided, and the input/output characteristics and the charge-discharge rate characteristics of the nonaqueous electrolyte solution battery are easily set in appropriate ranges.

### <(III) Compound Represented by General Formula (1)>

The (III) compound represented by the general formula (1) (also referred to as "(III)") contained in the nonaqueous electrolyte solution of the present disclosure will be explained.

[Chem. 3] P(OR)₃ (1)

[In the general formula (1), R's are each independently an alkyl group, a cycloalkyl group, an alkenyl group, an alkynyl group, or an aryl group.]

Examples of the alkyl group represented by R include a linear or branched-chain alkyl group having 1 to 10 carbon atoms, and specific examples thereof include a methyl group, an ethyl group, an n-propyl group, an isopropyl group, an n-butyl group, a sec-butyl group, an isobutyl group, a tert-butyl group, an n-pentyl group, an isopentyl group, a neopentyl group, an n-hexyl group, and an n-heptyl group.

Examples of the cycloalkyl group represented by R include a cycloalkyl group having 3 to 10 carbon atoms, and specific examples thereof include a cyclopropyl group, a cyclopentyl group, and a cyclohexyl group.

Examples of the alkenyl group represented by R include a linear or branched-chain alkenyl group having 2 to 10 carbon atoms, and specific examples thereof include a vinyl group, an allyl group, a I-propenyl group, an isopropenyl group, a 1-methyl-2-propenyl group, a 2-methyl-2-propenyl group, a 1,1-dimethyl-2-propenyl group, a 1-butenyl group, a 2-butenyl group, a 3-butenyl group, a 3-methyl-2-butenyl group, a 1,3-butadienyl group, and a 1-pentynyl group.

Examples of the alkynyl group represented by R include a linear or branched-chain alkynyl group having 2 to 10 carbon atoms, and specific examples thereof include an ethynyl group, a 1-propynyl group, a 2-propynyl group, a 1-methyl-2-propynyl group, a 1,1-dimethyl-2-propynyl group, a 2-butynyl group, a 3-butynyl group, and a 4-butynyl group.

Examples of the aryl group represented by R include an aryl group having 6 to 10 carbon atoms, and specific examples thereof include a phenyl group, a tolyl group, and a xylyl group.

At least any one hydrogen atom of the alkyl group, the cycloalkyl group, the alkenyl group, the alkynyl group, and the aryl group may be substituted with a substituent. Examples of the substituent include a halogen atom, a nitrile group, an isocyanate group, a carbonyl group, an ether group, an ester group, an alkyl group, and a group formed by combining two or more of these.

Examples of the halogen atom as the substituent include a fluorine atom, a chlorine atom, a bromine atom, and an iodine atom.

Examples of the alkyl group as the substituent include a linear or branched-chain alkyl group having 1 to 10 carbon atoms.

R preferably has a fluorine atom as a substituent and is more preferably an alkyl group having a fluorine atom.

Specific examples of the alkyl group having a fluorine atom include a 1,1,1,3,3,3-hexafluoro-2-propyl group, a 2,2,2-trifluoroethyl group, a 2,2-difluoroethyl group, and a 2-fluoroethyl group.

The three R's in the general formula (1) may be the same or different from each other, but from the viewpoint of ease of synthesis, three R's are preferably the same group.

Specific examples of the compound represented by the general formula (1) are shown below, but the compound represented by the general formula (1) is not limited thereto.

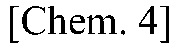

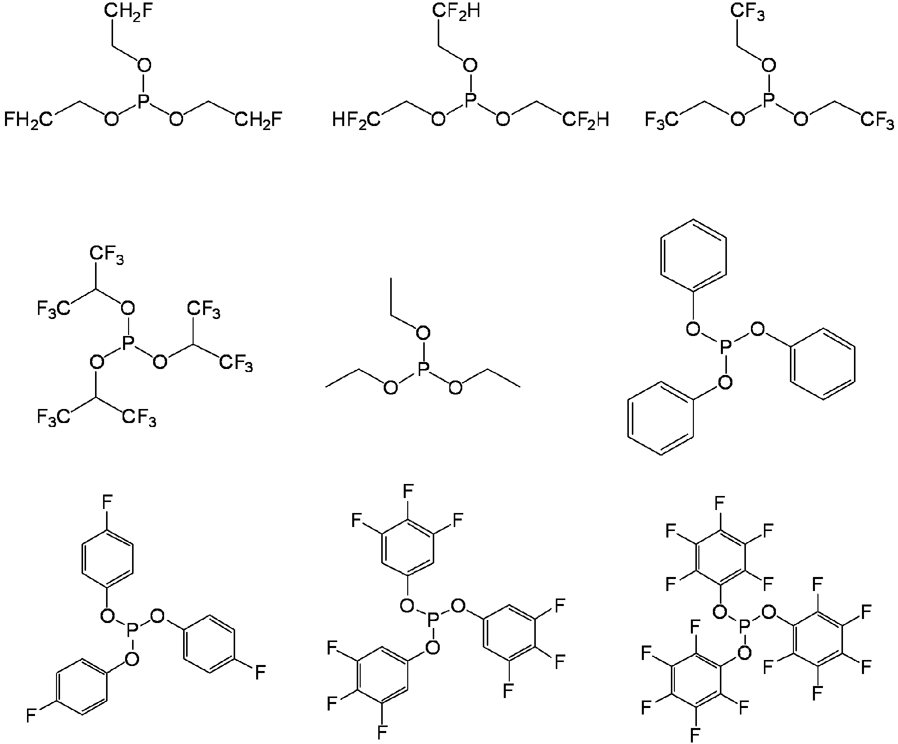

Of these, the compound represented by the general formula (1), namely (III) is preferably at least one selected from the group consisting of tris(1,1,1,3,3,3-hexafluoro-2-propyl) phosphite, tris(2,2,2-trifluoroethyl) phosphite, tris(2,2-difluoroethyl) phosphite, and tris(2-fluoroethyl) phosphite.

In the nonaqueous electrolyte solution of the present disclosure, the lower limit of the component (III) content (hereinafter also referred to as "concentration of (III)") with respect to the total amount (100% by mass) of the nonaqueous electrolyte solution is preferably 0.01% by mass or more, more preferably 0.015% by mass, further preferably 0.03% by mass or more, particularly preferably 0.1% by mass or more, and most preferably 0.25% by mass or more. The upper limit of the concentration of (III) is preferably 10% by mass or less, more preferably 9% by mass or less, further preferably 6% by mass or less, particularly preferably 4% by mass or less, and most preferably 2.5% by mass or less.

When the concentration of (III) is 0.01% by mass or more, the effect of improving the wettability of the nonaqueous electrolyte solution with respect to the electrode surface is easily obtained. On the other hand, by setting the concentration of (III) to 10% by mass or less, an increase in the viscosity of the nonaqueous electrolyte solution can be suppressed, and an effect of suppressing an increase in the initial resistance of the nonaqueous electrolyte solution battery using the nonaqueous electrolyte solution is easily obtained.

The component (III) content with respect to the total amount of the nonaqueous electrolyte solution is preferably 0.01% by mass to 10% by mass, and more preferably 0.015 to 9% by mass.

In the nonaqueous electrolyte solution of the present disclosure, one type of compound may be used alone as the (III), or two or more types of compound may be mixed and used in any combination and any ratio according to the application.

The compound represented by the general formula (1) can be purchased as a commercially available product or produced by a known method.

In the case of a commercially available product, for example, triethyl phosphite, triphenyl phosphite, tris(2,2,2-trifluoroethyl) phosphite, and tris(1,1,1,3,3,3-hexafluoro-2-propyl) phosphite each manufactured by TCI can be used. Other than commercially available products, for example, tris(4-fluorophenyl) phosphite can be obtained by stirring 4-fluorophenol and phosphorus trichloride in ethyl methyl carbonate solvent in the presence of triethylamine.

### <Other Component that may be Contained>

The nonaqueous electrolyte solution of the present disclosure contains the above-mentioned components as basic components, but the nonaqueous electrolyte solution of the present disclosure may contain a component described below (hereinafter also referred to as "other component that may be contained" or "other component") in any combination at any ratio as long as the gist of the present disclosure is not impaired. For example, another additive that is generally used in this technical field may be added at any ratio as the other component.

Examples of the other component include:
aromatic compounds such as cyclohexylbenzene, cyclohexyl fluorobenzene, biphenyl, 2-fluorobiphenyl, tert-butylbenzene, tert-amylbenzene, 2-fluorotoluene, fluorobenzene, and difluoroanisole;
carbonate compounds such as vinylene carbonate (hereinafter, sometimes referred to as "VC"), an oligomer of vinylene carbonate (a number-average molecular weight in terms of polystyrene of 170 to 5,000), vinylethylene carbonate, divinylethylene carbonate, fluoroethylene carbonate (hereinafter, sometimes referred to as "FEC"), ethynyl ethylene carbonate, trans-difluoroethylene carbonate, methyl propargyl carbonate, ethyl propargyl carbonate, dipropargyl carbonate, dimethyl vinylene carbonate, dimethyl dicarbonate, bis(1,1,1,3,3,3-hexafluoro-1-propyl) carbonate, and bis(2,2,2-trifluoroethyl) carbonate;
isocyanate compounds such as 1,6-diisocyanatohexane;
organic acid anhydrides such as maleic anhydride, succinic anhydride, 1,4-dioxan-2,6-dione, glutaric anhydride, methanedisulfonic anhydride, 1,2-ethanedisulfonic anhydride, methanesulfonic anhydride, 2-sulfobenzoic anhydride, and 1,3-propanedisulfonic anhydride;
sulfonate ester compounds and sulfonyl compounds such as 1,3-propanesultone, 1,3-propenesultone, 1,4-butanesultone, 2,4-butanesultone, 1,3,2-dioxathiolan-2,2-dioxide, 4-propyl-1,3,2-dioxathiolan-2,2-dioxide, 1,3-dithiolane-1,1,3,3-tetraoxide, 1,3-dithiane-1,1,3,3-tetraoxide, 1,2-oxathiolan-5-one-2,2-dioxide, methylene methanedisulfonate, dimethylene methanedisulfonate, trimethylene methanedisulfonate, methyl methanesulfonate, methanesulfonyl fluoride, ethenesulfonyl fluoride, and N,N'-carbonylbis(N-methylsulfamoyl fluoride);
borate ester compounds such as difluoro(picolinato)borate;
phosphate ester compounds such as phenyl difluorophosphate, tripropargyl phosphate, and tetrafluoro(picolinato)phosphate;
phosphazene compounds such as (ethoxy)pentafluorocyclotriphosphazene;
nitrile compounds such as succinonitrile;
silane compounds such as methyldifluorovinylsilane, methylfluorodivinylsilane, dimethyldivinylsilane, trivinylmethylsilane, trivinylfluorosilane, tetravinylsilane, tris(trimethylsilyl)borate, and tris(trimethylsilyl)phosphate;
siloxane compounds such as 1,3-dimethyl-1,3-divinyl-1,3-di(1,1,1,3,3,3-hexafluoroisopropyl)disiloxane;
sulfonate salts such as a fluorosulfonate salt, a trifluoromethanesulfonate salt, a pentafluoroethanesulfonate salt, and a nonafluorobutanesulfonate salt (of these, a fluorosulfonate salt and a trifluoromethanesulfonate salt are preferable);
monoalkylsulfate salts such as a monomethyl sulfate salt and a monoethyl sulfate salt;
imide salts such as a bis(trifluoromethanesulfonyl)imide salt, a bis(pentafluoroethanesulfonyl)imide salt, a (trifluoromethanesulfonyl)(nonafluorobutanesulfonyl)imide salt, a (trifluoromethanesulfonyl)(pentafluoroethanesulfonyl)imide salt, a (trifluoromethanesulfonyl)(fluorosulfonyl)imide salt, a (pentafluoroethanesulfonyl)(fluorosulfonyl) imide salt, a (difluorophosphoryl)(fluorosulfonyl)imide salt, a (difluorophosphoryl)(trifluoromethanesulfonyl)imide salt, a bis(difluorophosphoryl)imide salt, a (fluorosulfonyl)(lithium carbonyloxymethanesulfonate) imide salt, a (fluorosulfonyl)(carbonyldi(2-propenyl)phosphoryl)imide salt, and a (carbonyldi(propargyl)phosphoryl)imide salt (of these, a bis(trifluoromethanesulfonyl)imide salt, a (trifluoromethanesulfonyl)(fluorosulfonyl)imide salt, a (difluorophosphoryl)(fluorosulfonyl)imide salt, a (difluorophosphoryl)(trifluoromethanesulfonyl)imide salt, and a bis(difluorophosphoryl)imide salt are preferable) or imide compounds in which hydrogen atoms are bonded to the nitrogen atoms instead of the cations in the imide salts;
phosphate salts such as a monofluorophosphate salt, a difluorophosphate salt, a tetrafluoro(malonato)phosphate salt, a tris(oxalato)phosphate salt, a difluorobis(oxalato)phosphate salt, and a tetrafluorooxalatophosphate salt;
borate salts such as a bis(oxalato)borate salt, a difluorooxalatoborate salt, and a difluoro(malonato)borate salt;
methide salts such as a tris(trifluoromethanesulfonyl)methide salt and a tris(fluorosulfonyl)methide salt;
carboxylate salts such as an acrylate salt and a methacrylate salt;
inorganic salts such as a nitrate salt and a nitrite salt; and
fluorine-containing alcohols such as hexafluoroisopropanol and trifluoroethanol. The cation in the salt may be an alkali metal ion, an alkaline earth metal ion, or a quaternary ammonium.

Moreover, the nonaqueous electrolyte solution of the present disclosure may further contain the following compounds to improve the cycle capacity retention rate and the gas generation during a cycle test.

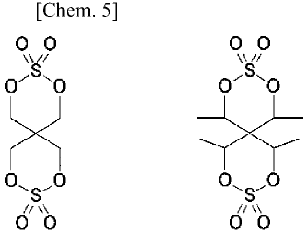

The nonaqueous electrolyte solution of the present disclosure preferably further contains at least one selected from the group consisting of cyclohexylbenzene, cyclohexyl fluorobenzene, biphenyl, 2-fluorobiphenyl, tert-butylbenzene, tert-amylbenzene, 2-fluorotoluene, fluorobenzene, difluoroanisole, vinylene carbonate, an oligomer of vinylene carbonate (a number-average molecular weight in terms of polystyrene of 170 to 5,000), vinylethylene carbonate, divinylethylene carbonate, fluoroethylene carbonate, ethynyl ethylene carbonate, trans-difluoroethylene carbonate, methyl propargyl carbonate, ethyl propargyl carbonate, dipropargyl carbonate, dimethyl vinylene carbonate, dimethyl dicarbonate, bis(1,1,1,3,3,3-hexafluoro-1-propyl) carbonate, bis(2,2,2-trifluoroethyl) carbonate, 1,6-diisocyanatohexane, maleic anhydride, succinic anhydride, 1,4-dioxane-2,6-dione, glutaric anhydride, methanedisulfonic anhydride, 1,2-ethanedisulfonic anhydride, methanesulfonic anhydride, 2-sulfobenzoic anhydride, 1,3-propanedisulfonic anhydride, 1,3-propanesultone, 1,3-propenesultone, 1,4-butanesultone, 2,4-butanesultone, 1,3,2-dioxathiolane-2,2-dioxide, 4-propyl-1,3,2-dioxathiolane-2,2-dioxide, 1,3-dithiolane-1,1,3,3-tetraoxide, 1,3-dithiane-1,1,3,3-tetraoxide, 1,2-oxathiolan-5-one-2,2-dioxide, methylene methanedisulfonate, dimethylene methanedisulfonate, trimethylene methanedisulfonate, methyl methanesulfonate, methanesulfonyl fluoride, ethenesulfonyl fluoride, N,N'-carbonylbis(N-methylsulfamoyl fluoride), difluoro(picolinato)borate, phenyl difluorophosphate, tripropargyl phosphate, tetrafluoro(picolinato)phosphate, (ethoxy)pentafluorocyclotriphosphazene, succinonitrile, methyldifluorovinylsilane, methylfluorodivinylsilane, dimethyldivinylsilane, trivinylmethylsilane, trivinylfluorosilane, tetravinylsilane, tris(trimethylsilyl)borate, tris(trimethylsilyl)phosphate, 1,3-dimethyl-1,3-divinyl-1,3-di(1,1,1,3,3,3-hexafluoroisopropyl)disiloxane, a fluorosulfonate salt, a trifluoromethanesulfonate salt, a pentafluoroethanesulfonate salt, a nonafluorobutanesulfonate salt, a monomethyl sulfate salt, a monoethyl sulfate salt, a bis(trifluoromethanesulfonyl)imide salt, a bis(pentafluoroethanesulfonyl)imide salt, a (trifluoromethanesulfonyl)(nonafluorobutanesulfonyl)imide salt, a (trifluoromethanesulfonyl)(pentafluoroethanesulfonyl)imide salt, a (trifluoromethanesulfonyl)(fluorosulfonyl)imide salt, a (pentafluoroethanesulfonyl)(fluorosulfonyl)imide salt, a (difluorophosphoryl)(fluorosulfonyl)imide salt, a (difluorophosphoryl)(trifluoromethanesulfonyl)imide salt, a bis(difluorophosphoryl)imide salt, (fluorosulfonyl)(lithium carbonyloxymethanesulfonate)imide, a (fluorosulfonyl)(carbonyldi(2-propenyl)phosphoryl)imide salt, a (carbonyldi(propargyl)phosphoryl)imide salt, a monofluorophosphate salt, a difluorophosphate salt, a tetrafluoro(malonato)phosphate salt, a tris(oxalato)phosphate salt, a difluorobis(oxalato)phosphate salt, a tetrafluorooxalatophosphate salt, a bis(oxalato)borate salt, a difluorooxalatoborate salt, a difluoro(malonato)borate salt, a tris(trifluoromethanesulfonyl)methide salt, a tris(fluorosulfonyl)methide salt, an acrylate salt, a methacrylate salt, a nitrate salt, a nitrite salt, hexafluoroisopropanol, and trifluoroethanol.

By adding the other component to the nonaqueous electrolyte solution of the present disclosure, at least one of the overcharge prevention effect, the negative electrode film formation effect, and the positive electrode protection effect may be improved.

In addition, as in the case of being used in a nonaqueous electrolyte solution battery referred to as a lithium polymer battery, an electrolyte solution for a nonaqueous electrolyte solution battery can be quasi-solidified with a gelling agent or a cross-linked polymer before use. Examples of the polymer include polymers having polyethylene oxide as a principal chain or a side chain, homopolymers or copolymers of polyvinylidene fluoride, methacrylic acid ester polymers, and polyacrylonitrile.

When the nonaqueous electrolyte solution of the present disclosure contains the other component, the other component content may be 0.01% by mass or more and 10% by mass or less with respect to the total amount of the nonaqueous electrolyte solution.

Here, of the other components described above, the fluoroethylene carbonate content may be 0.01% by mass or more and 55% by mass or less with respect to the total amount of the nonaqueous electrolyte solution.

The content of a bis(trifluoromethanesulfonyl)imide salt, a trifluoromethanesulfonate salt, or a nonafluorobutanesulfonate salt may be 0.01% by mass or more and 20% by mass or less with respect to the total amount of the nonaqueous electrolyte solution.

The content of bis(1,1,1,3,3,3-hexafluoro-1-propyl) carbonate or bis(2,2,2-trifluoroethyl) carbonate may be 0.1% by mass or more and 70.0% by mass or less with respect to the total amount of the nonaqueous electrolyte solution.

Moreover, when the other component is an ionic salt, the cation thereof is more preferably a lithium ion when used for a lithium ion battery application and is more preferably a sodium ion when used for a sodium ion battery application.

In the nonaqueous electrolyte solution of the present disclosure, a plurality of types of the solutes described above (a lithium salt, a sodium salt, and the like) and the salt compounds as the other components may be used according to required characteristics, and thus four or more types of alkali metal salts in total may be used. Moreover, five or more types of the alkali metal salts in total may be used.

The nonaqueous electrolyte solution of the present disclosure is suitably used for a nonaqueous electrolyte solution battery (preferably a nonaqueous electrolyte solution secondary battery) having at least one of the specific electrodes described above.

The nonaqueous electrolyte solution battery preferably has at least one of a positive electrode containing a layered-rocksalt-type positive electrode active material and having a positive electrode active material layer with a density of 2.50 to 5 g/cm³, a positive electrode containing an olivine-type positive electrode active material and having a positive electrode active material layer with a density of 1.50 to 3 g/cm³, a positive electrode containing a spinel-type positive electrode active material and having a positive electrode active material layer with a density of 2.00 to 4 g/cm³, a negative electrode containing a graphite negative electrode active material and having a negative electrode active material layer with a density of 1.00 to 3 g/cm³, a negative electrode containing a Si-containing negative electrode active material and graphite and having a negative electrode active material layer with a density of 1.00 to 3 g/cm³, and a negative electrode containing a titanium-containing oxide negative electrode active material and having a negative electrode active material layer with a density of 1.50 to 3 g/cm³.

The specific electrodes will be explained in detail in the section on the nonaqueous electrolyte solution battery below.

The wettability with respect to the surface of the specific electrode is improved by the nonaqueous electrolyte solution of the present disclosure. Therefore, in the production of the nonaqueous electrolyte solution battery, the time for impregnating the specific electrode with the nonaqueous electrolyte solution, namely, the time required for the standing step of impregnating the specific electrode after the nonaqueous electrolyte solution is injected into the battery cell is shortened, and the production efficiency of the nonaqueous electrolyte solution battery can be improved.

### <Regarding Wettability with respect to Electrode Surface>

The wettability of the nonaqueous electrolyte solution with respect to the electrode surface can be evaluated as follows.

In an environment having a dew point of -45°C, 5 µL of a nonaqueous electrolyte solution is dropped on an electrode sheet cut into 5 cm × 5 cm at 25°C with a microsyringe (Hamilton syringe 7105 KH), and a video is taken by a camera from above. The droplet areas three seconds after landing and 15 seconds after landing are calculated by binarizing, and an increase of the droplet area is evaluated. The larger the increase in the droplet area is, the more the electrolyte solution wets and spreads over the electrode surface.

### 2. Nonaqueous Electrolyte Solution Battery

The nonaqueous electrolyte solution battery of the present disclosure has at least the nonaqueous electrolyte solution of the present disclosure above and at least one of a positive electrode containing a layered-rocksalt-type positive electrode active material and having a positive electrode active material layer with a density of 2.50 g/cm³ or more, a positive electrode containing an olivine-type positive electrode active material and having a positive electrode active material layer with a density of 1.50 g/cm³ or more, a positive electrode containing a spinel-type positive electrode active material and having a positive electrode active material layer with a density of 2.00 g/cm³ or more, a negative electrode containing a graphite negative electrode active material and having a negative electrode active material layer with a density of 1.00 g/cm³ or more, a negative electrode containing a Si-containing negative electrode active material and graphite and having a negative electrode active material layer with a density of 1.00 g/cm³ or more, or a negative electrode containing a titanium-containing oxide negative electrode active material and having a negative electrode active material layer with a density of 1.50 g/cm³ or more. Further, a separator, an exterior body, and the like may be included. Instead of the separator, a solid electrolyte may be used as a medium impregnated with the nonaqueous electrolyte solution.

The nonaqueous electrolyte solution battery of the present disclosure has at least a positive electrode, a negative electrode, and the nonaqueous electrolyte solution of the present disclosure, and preferably one or both of the positive electrode and the negative electrode are specific electrodes.

The nonaqueous electrolyte solution battery of the present disclosure is preferably a nonaqueous electrolyte solution secondary battery.

### [Negative Electrode]

Examples of the negative electrode include a negative electrode containing a graphite negative electrode active material and having a negative electrode active material layer with a density of 1.00 g/cm³ or more, a negative electrode containing a Si-containing negative electrode active material and graphite and having a negative electrode active material layer with a density of 1.00 g/cm³ or more, and a negative electrode containing a titanium-containing oxide negative electrode active material and having a negative electrode active material layer with a density of 1.50 g/cm³ or more. A negative electrode other than the specific electrodes may be used, provided that the nonaqueous electrolyte solution battery of the present disclosure has at least one specific electrode.
· Negative Electrode Containing Graphite Negative Electrode Active Material and Having Negative Electrode Active Material Layer with a Density of 1.00 g/cm³ or More

### <Negative Electrode Active Material>

### (Graphite Negative Electrode Active Material)

Examples of the graphite negative electrode active material include artificial graphite and natural graphite, and examples of the shape of graphite include scale-like, scaly, spherical, and soil shapes. Examples of the artificial graphite include carbon material in which the d value of the lattice plane (002) plane in X-ray diffraction is 0.350 nm or less, and examples thereof include those obtained by graphitizing pyrolytic carbons, cokes (for example, pitch coke, needle coke, and petroleum coke), graphite, calcined products of an organic polymer compound (for example, a carbonized product obtained by calcining phenol resin and/or furan resin at an appropriate temperature), carbon fibers, and activated carbon. One type thereof may be used alone as the graphite negative electrode active material, or two or more types of the compounds may be used in combination as the graphite negative electrode active material. A simple substance containing one or more elements selected from the group consisting of B, C, N, F, Na, Mg, Al, Si, P, S, Cl, K, Ca, Ti, Zn, Zr, and W or a compound thereof may be present on a part of or the entire surface of the graphite particle.

In addition, the graphite negative electrode active material may be used not only alone but also in combination with another negative electrode active material such as the later-described negative electrode active material containing a Si-containing negative electrode active material and graphite, and a titanium-containing oxide described later.

When another negative electrode active material is used, the other negative electrode active material content is preferably less than 50% by mass and more preferably 25% by mass or less with respect to the total amount of the negative electrode active material.

### <Negative Electrode Current Collector>

The negative electrode has a negative electrode current collector. As the negative electrode current collector, for example, copper, stainless steel, nickel, titanium, or alloys thereof can be used. For the sodium ion battery, aluminum, an alloy thereof, or the like can also be used.

### <Negative Electrode Active Material Layer>

In the negative electrode, for example, a negative electrode active material layer is formed on at least one surface of the negative electrode current collector. The negative electrode active material layers are preferably formed on both surfaces of the negative electrode current collector. The negative electrode active material layer contains, for example, the negative electrode active material described above, a binder, and if necessary, an electrically conductive agent.

Examples of the binder include polytetrafluoroethylene, polyvinylidene fluoride, tetrafluoroethylene-perfluoroalkyl vinyl ether copolymers, styrene-butadiene rubber (hereinafter also referred to as "SBR"), carboxymethyl cellulose, methylcellulose, cellulose acetate phthalate, hydroxypropyl methylcellulose, polyvinyl alcohol, and polyimide.

As the electrically conductive agent, for example, carbon materials such as acetylene black, Ketjen black, furnace black, carbon fibers, graphite, and fluorinated graphite can be used.

### <Density of Negative Electrode Active Material Layer>

The density of the negative electrode active material layer containing the graphite negative electrode active material is 1.00 g/cm³ or more, may be 1.10 g/cm³ or more, may be 1.20 g/cm³ or more, may be 1.30 g/cm³ or more, may be 1.40 g/cm³ or more, may be more than 1.50 g/cm³, may be 1.60 g/cm³ or more, and may be 1.70 g/cm³ or more. The density of the negative electrode active material layer containing the graphite negative electrode active material is preferably 3 g/cm³ or less, may be 2.5 g/cm³ or less, may be 2.3 g/cm³ or less, may be 2.2 g/cm³ or less, may be 2.1 g/cm³ or less, and may be 2 g/cm³ or less.

The density of the negative electrode active material layer containing the graphite negative electrode active material is preferably 1.00 to 3 g/cm³.
· Negative Electrode Containing Si-Containing Negative Electrode Active Material and Graphite and Having Negative Electrode Active Material Layer with Density of 1.00 g/cm³ or More

### <Negative Electrode Active Material>

### (Si-Containing Negative Electrode Active Material)

The Si-containing negative electrode active material is preferably at least one selected from the group consisting of Si and a Si metal oxide.

Si and a Si metal oxide are collectively referred to as a Si-containing compound in the present description. Examples of the Si-containing compound include Si, SiOx (0 < x ≤ 2), SiC, and SiN, and SiOx and SiC are preferable from the viewpoint of reversible capacity and cycle characteristics. The range of x is preferably 0.1 or more and 1.6 or less, and more preferably 0.3 or more and 1.4 or less. A simple substance containing one or more elements selected from the group consisting of B, C, N, F, Na, Mg, Al, Si, P, S, Cl, K, Ca, Ti, Zn, Zr, and W or a compound thereof may be present on a part of or the entire surface of the Si-containing compound particle.

As the graphite, the graphite described above in connection with the graphite negative electrode active material can be used.

The total content of the Si-containing negative electrode active material contained in the negative electrode active material may be 0.1 to 50% by mass, preferably 0.1 to 30% by mass, and more preferably 1 to 25% by mass, when the total amount of the Si-containing negative electrode active material and the graphite contained in the negative electrode active material is 100% by mass.

In addition, the negative electrode active material containing the Si-containing negative electrode active material and the graphite may be used not only alone but also in combination with another negative electrode active material such as a graphite negative electrode active material and a titanium-containing oxide described below.

When another negative electrode active material is used, the other negative electrode active material content is preferably less than 50% by mass and more preferably 25% by mass or less with respect to the total amount of the negative electrode active material.

Regarding the negative electrode current collector and the negative electrode active material layer, the above description can be applied as it is.

### <Density of Negative Electrode Active Material Layer>

The density of the negative electrode active material layer containing the Si-containing negative electrode active material and graphite is 1.00 g/cm³ or more, may be 1.10 g/cm³ or more, may be 1.20 g/cm³ or more, may be 1.30 g/cm³ or more, may be 1.40 g/cm³ or more, may be 1.50 g/cm³ or more, and may be 1.60 g/cm³ or more. The density of the negative electrode active material layer containing the Si-containing negative electrode active material and graphite is preferably 3 g/cm³ or less, may be 2.5 g/cm³ or less, may be 2.3 g/cm³ or less, may be 2.2 g/cm³ or less, may be 2.1 g/cm³ or less, and may be 2 g/cm³ or less.

The density of the negative electrode active material layer containing the Si-containing negative electrode active material and graphite is preferably 1.00 to 3 g/cm³.
· Negative Electrode Containing Titanium-Containing Oxide Negative Electrode Active Material and Having Negative Electrode Active Material Layer with a Density of 1.50 g/cm³ or More

### <Negative Electrode Active Material>

### (Titanium-Containing Oxide)

Examples of the titanium-containing oxide include anatase-type titanium dioxide, rutile-type titanium dioxide, brookite-type titanium dioxide, spinel-type lithium titanate, ramsdellite-type lithium titanate, and monoclinic niobium-titanium composite oxide, and from the viewpoint of reversible capacity and cycle characteristics, brookite-type titanium dioxide, spinel-type lithium titanate, and monoclinic niobium-titanium composite oxide are preferable, and spinel-type lithium titanate is more preferable. Specific examples thereof include Li_{4+α}Ti₅O₁₂ (α changes within the range of 0 ≤ α ≤ 3 by a charge/discharge reaction) and Li_{2+β}Ti₃O₇ (β changes within the range of 0 ≤ β ≤ 3 by a charge/discharge reaction). One type of titanium-containing oxide may be used alone as the negative electrode active material, or two or more types of compounds may be used in combination. In addition, some of the titanium atoms can be substituted with other elements such as Mg, Al, V, Cr, Mn, Fe, Co, Ni, Cu, Zn, and Zr. A simple substance containing one or more elements selected from the group consisting of B, C, N, F, Na, Mg, Al, Si, P, S, Cl, K, Ca, Ti, Zn, Zr, and W or a compound thereof may be present on a part of or the entire surface of the titanium-containing oxide particle.

In addition, the titanium-containing oxide may be used not only alone but also in combination with another negative electrode active material such as a graphite negative electrode active material and a negative electrode active material containing a Si-containing negative electrode active material and graphite.

When another negative electrode active material is used, the other negative electrode active material content is preferably less than 50% by mass and more preferably 25% by mass or less with respect to the total amount of the negative electrode active material.

Regarding the negative electrode current collector and the negative electrode active material layer, the above description can be applied as it is.

### <Density of Negative Electrode Active Material Layer>

The density of the negative electrode active material layer containing the titanium-containing oxide negative electrode active material is 1.50 g/cm³ or more, may be 1.60 g/cm³ or more, may be 1.70 g/cm³ or more, may be 1.80 g/cm³ or more, may be 1.90 g/cm³ or more, may be 2.00 g/cm³ or more, may be 2.10 g/cm³ or more, and may be 2.20 g/cm³ or more. The density of the titanium-containing oxide negative electrode active material is preferably 3 g/cm³ or less, may be 2.9 g/cm³ or less, may be 2.8 g/cm³ or less, may be 2.7 g/cm³ or less, may be 2.6 g/cm³ or less, and may be 2.5 g/cm³ or less.

The density of the negative electrode active material layer containing the titanium-containing oxide negative electrode active material is preferably 1.50 to 3 g/cm³.

### · Other Negative Electrode

Preferred examples of the other negative electrode include a negative electrode containing one or more metals selected from lithium metal, hard carbon, Sn, and Al, an alloy containing any of these metals, or an alloy of any of these metals or the alloy and lithium, a Si-containing negative electrode active material, and graphite as the negative electrode active materials, and not corresponding to the specific electrodes.

### [Positive Electrode]

Examples of the positive electrode include a positive electrode containing a layered-rocksalt-type positive electrode active material and having a positive electrode active material layer with a density of 2.50 g/cm³ or more, a positive electrode containing an olivine-type positive electrode active material and having a positive electrode active material layer with a density of 1.50 g/cm³ or more, and a positive electrode containing a spinel-type positive electrode active material and having a positive electrode active material layer with a density of 2.00 g/cm³ or more. The positive electrode may be any other positive electrode as long as the nonaqueous electrolyte solution battery of the present disclosure has at least one of the specific electrodes.
· Positive Electrode Containing Layered-Rocksalt-Type Positive Electrode Active Material and Having Positive Electrode Active Material Layer with a Density of 2.50 g/cm³ or More

### <Positive Electrode Active Material>

### (Layered-Rocksalt-Type Positive Electrode Active Material)

The layered-rocksalt-type positive electrode active material is a compound represented by Li₁₊ₐM¹O₂ (-0.2 ≤ a ≤ 0.1), and M¹ is at least one element selected from the group consisting of Mn, Co, and Ni. Further, a part of M¹ can be substituted with another element such as Mg, Al, Ti, V, Cr, Fe, Cu, Zn, Zr, and Ta. A simple substance containing one or more elements selected from the group consisting of Li, B, C, N, F, Na, Mg, Al, Si, P, S, Cl, K, Ca, Ti, Zn, Zr, and W or a compound thereof may be present on a part of or the entire particle surface of the layered-rocksalt-type positive electrode active material.

Examples of the compound represented by Li₁₊ₐM¹O₂ include a lithium-cobalt composite oxide, a lithium-nickel composite oxide, a lithium-nickel-cobalt composite oxide, a lithium-nickel-cobalt-aluminum composite oxide, a lithium-cobalt-manganese composite oxide, a lithium-nickel-manganese composite oxide, and a lithium-nickel-manganese-cobalt composite oxide. Specific examples thereof include LiCoO₂, LiNiO₂, Li[Ni_{1/3}Mn_{1/3}Co_{1/3}]O₂, Li[Ni_{0.45}Mn_{0.35}CO_{0.2}]O₂, Li[Ni_{0.5}Mn_{0.3}CO_{0.2}]O₂, Li[Ni_{0.6}Mn_{0.2}Co_{0.2}]O₂, Li[Ni_{0.8}Mn_{0.1}Co_{0.1}]O₂, Li[Ni_{0.49}Mn_{0.3}CO_{0.2}Zr_{0.01}]O₂, Li[Ni_{0.49}Mn_{0.3}Co_{0.2}Mg_{0.01}]O₂, Li[Ni_{0.8}Co_{0.2}]O₂, Li[Ni_{0.83}Co_{0.10}Al_{0.05}]O₂, Li[Ni_{0.87}Co_{0.10}Al_{0.03}]O₂, Li[Ni_{0.90}Co_{0.07}Al_{0.03}]O₃, Li[Ni_{0.6}Co_{0.3}Al_{0.1}]O₂, Li_{1.05}[Ni_{0.8}Co_{0.1}Mn_{0.1}]O₂, and Li_{1.1}[Ni_{0.2}Mn_{0.8}]O₂.

In addition, examples of the layered-rocksalt-type positive electrode active material include a lithium-excess layered transition metal oxide represented by yLiM²O₂·(1-y)Li₂M³O₃ (y is a number satisfying 0 < y < 1, M² is at least one metal element having an average oxidation number of 3⁺, M³ is at least one metal element having an average oxidation number of 4⁺, and M² is preferably one metal element selected from trivalent V, Cr, Mn, Fe, Co, and Ni, but the average oxidation number may be adjusted to trivalent using an equal amount of divalent and tetravalent metals). M³ is preferably one or more metal elements selected from Ti, Mn, and Zr.

Specific examples of the lithium-excess layered transition metal oxide represented by yLiM²O₂·(1-y)Li₂M³O₃ include 0.5[LiNi_{0.5}Mn_{0.5}O₂]·0.5[Li₂MnO₃], 0.5[LiNi_{1/3}Co_{1/3}Mn_{1/3}O₂]·0.5[LhMnO₃], 0.5[LiNi_{0.375}Co_{0.25}Mn_{0.375}O₂]·0.5[Li₂MnO₃], 0.5[LiNi_{0.375}Co_{0.125}Fe_{0.125}Mn_{0.375}O₂]·0.5[Li₂MnO₃], and 0.45[LiNi_{0.375}Co_{0.25}Mn_{0.375}O₂]·0.10[Li₂TiO₃]·O.45[Li₂MnO₃].

As the layered-rocksalt-type positive electrode active material, one type of compound represented by Li₁₊ₐM¹O₂ or yLiM²O₂·(1-y)Li₂M³O₃ may be used alone, or two or more types of compounds may be used in combination.

Further, it may be used in combination not only with the positive electrode active material having the layered-rocksalt-type structure, but also with a positive electrode active material having another structure such as an olivine type or a spinel type.

When a positive electrode active material having another structure is used, the content of the positive electrode active material having another structure is preferably less than 50% by mass and more preferably 25% by mass or less with respect to the total amount of the positive electrode active material.

### <Positive Electrode Current Collector>

The positive electrode has a positive electrode current collector. As the positive electrode current collector, for example, aluminum, stainless steel, nickel, titanium, or alloys thereof can be used.

### <Positive Electrode Active Material Layer>

In the positive electrode, for example, a positive electrode active material layer is formed on at least one surface of the positive electrode current collector. The positive electrode active material layers are preferably formed on both surfaces of the positive electrode current collector. The positive electrode active material layer contains, for example, the positive electrode active material described above, a binder, and if necessary, an electrically conductive agent.

Examples of the binder include those described in <Negative Electrode Active Material Layer> above.

As the electrically conductive agent, for example, a carbon material such as acetylene black, Ketjen black, furnace black, carbon fibers, graphite (granular graphite and flake graphite), or fluorinated graphite can be used. For the positive electrode, acetylene black or Ketjen black with low crystallinity or the like is preferably used.

### <Positive Electrode Active Material Layer Density>

The density of the positive electrode active material layer containing the layered-rocksalt-type positive electrode active material is 2.50 g/cm³ or more, may be 2.60 g/cm³ or more, may be 2.70 g/cm³ or more, may be 2.80 g/cm³ or more, may be 2.90 g/cm³ or more, may be more than 3.00 g/cm³, may be 3.10 g/cm³ or more, and may be 3.20 g/cm³ or more. The density of the positive electrode active material layer containing the layered-rocksalt-type positive electrode active material is preferably 5 g/cm³ or less, may be 4.5 g/cm³ or less, may be 4.25 g/cm³ or less, may be 4 g/cm³ or less, may be 3.9 g/cm³ or less, and may be 3.8 g/cm³ or less.

The density of the positive electrode active material layer containing the layered-rocksalt-type positive electrode active material is preferably 2.50 to 5 g/cm³.
· Positive Electrode Containing Olivine-Type Positive Electrode Active Material and Having Positive Electrode Active Material Layer with a Density of 1.50 g/cm³ or More

### <Positive Electrode Active Material>

### (Olivine-Type Positive Electrode Active Material)

The olivine-type positive electrode active material is a compound represented by Li_{b}M⁴PO₄ (0 < b ≤ 1), and M⁴ is at least one element selected from the group consisting of Mn, Fe, Co, and Ni. M⁴ preferably contains Fe, Mn, or both Fe and Mn and more preferably contains Fe or both Fe and Mn, from the viewpoint of battery capacity and cycle characteristics. A part of M⁴ can be substituted with another element such as Mg, Al, Ti, V, Cr, and Zr. A simple substance containing one or more elements selected from the group consisting of B, C, N, F, Na, Mg, Al, Si, P, S, Cl, K, Ca, Ti, Zn, Zr, and W or a compound thereof may be present on a part of or the entire particle surface of the olivine-type positive electrode active material.

Specific examples of the compound represented by Li_{b}M⁴PO₄ include LiMnPO₄, LiFePO₄, LiCoPO₄, LiNiPO₄, LiFe_{0.3}Mn_{0.3}PO₄, LiFe_{0.4}Mn_{0.6}PO₄, LiFe_{0.3}Mn_{0.7}PO₄, LiFe_{0.3}Mn_{0.4}Mg_{0.1}PO₄, and LiFe_{0.3}Mn_{0.43}Zr_{0.03}PO₄.

As the olivine-type positive electrode active material, one type of compound represented by Li_{d}M⁴PO₄ may be used alone, or two or more types of compounds may be used in combination.

Further, it may be used in combination not only with the positive electrode active material having the olivine-type structure, but also with a positive electrode active material having another structure such as a layered-rocksalt type or a spinel type.

When a positive electrode active material having another structure is used, the content of the positive electrode active material having another structure is preferably less than 50% by mass and more preferably 25% by mass or less with respect to the total amount of the positive electrode active material.

Regarding the positive electrode current collector and the positive electrode active material layer, the above description can be applied as it is.

### <Density of Positive Electrode Active Material Layer>

The density of the positive electrode active material layer containing the olivine-type positive electrode active material is 1.50 g/cm³ or more, may be 1.60 g/cm³ or more, may be 1.70 g/cm³ or more, may be 1.80 g/cm³ or more, may be 1.90 g/cm³ or more, may be 2.00 g/cm³ or more, may be 2.10 g/cm³ or more, and may be 2.20 g/cm³ or more. The density of the positive electrode active material layer containing the olivine-type positive electrode active material is preferably 3 g/cm³ or less, may be 2.9 g/cm³ or less, may be 2.8 g/cm³ or less, may be 2.7 g/cm³ or less, may be 2.6 g/cm³ or less, and may be 2.5 g/cm³ or less.

The density of the positive electrode active material layer containing the olivine-type positive electrode active material is preferably 1.50 to 3 g/cm³.
· Positive Electrode Containing Spinel-Type Positive Electrode Active Material and Having Positive Electrode Active Material Layer with a Density of 2.00 g/cm³ or More

### <Positive Electrode Active Material>

### (Spinel-Type Positive Electrode Active Material)

The spinel-type positive electrode active material is a compound represented by Li_{c}M⁵O_{4-d}D_{d} (0 < c ≤ 1) (0 ≤ d ≤ 1), and M⁵ is at least one element selected from the group consisting of Mn, Co, and Ni. D is a halogen atom and may be a fluorine atom in particular. Further, a part of M⁵ can be substituted with another element such as Mg, Al, Ti, V, Cr, Fe, Cu, Zn, Ga, Zr, and Ta. A simple substance containing one or more elements selected from the group consisting of Li, B, C, N, F, Na, Mg, Al, Si, P, S, Cl, K, Ca, Ti, Zn, Zr, and W or a compound thereof may be present on a part of or the entire particle surface of the spinel-type positive electrode active material.

Examples of the compound represented by Li_{c}M⁵O_{4-d}D_{d} include a lithium-manganese composite oxide and a lithium-manganese-nickel composite oxide. Specific examples thereof include LiMn₂O₄, LiMn_{1.95}Al_{0.05}O₄, LiMn_{1.9}Al_{0.1}O₄, LiMn_{1.9}Ni_{0.1}O₄, LiMn_{1.3}Ni_{0.3}O₄, and LiMn_{1.5}Ni_{0.45}Fe_{0.05}O₄. In addition, LiMn_{1.5}Ni_{0.5}O_{3.95}F_{0.05} and the like are also exemplified as specific examples.

A preferable embodiment is an embodiment in which d represents 0.

As the spinel-type positive electrode active material, one type of compound represented by Li_{c}M⁵Q_{4-d}D_{d} may be used alone, or two or more types of compounds may be used in combination.

Further, it may be used in combination not only with the positive electrode active material having the spinel-type structure, but also with a positive electrode active material having another structure such as a layered-rocksalt type or an olivine type.

When a positive electrode active material having another structure is used, the content of the positive electrode active material having another structure is preferably less than 50% by mass and more preferably 25% by mass or less with respect to the total amount of the positive electrode active material.

Regarding the positive electrode current collector and the positive electrode active material layer, the above description can be applied as it is.

### <Density of Positive Electrode Active Material Layer>

The density of the positive electrode active material layer containing the spinel-type positive electrode active material is 2.00 g/cm³ or more, may be 2.10 g/cm³ or more, may be 2.20 g/cm³ or more, may be 2.30 g/cm³ or more, may be 2.40 g/cm³ or more, may be 2.50 g/cm³ or more, may be 2.60 g/cm³ or more, and may be 2.70 g/cm³ or more. The density of the positive electrode active material layer containing the spinel-type positive electrode active material is preferably 4 g/cm³ or less, may be 3.75 g/cm³ or less, may be 3.5 g/cm³ or less, may be 3.4 g/cm³ or less, may be 3.3 g/cm³ or less, and may be 3.2 g/cm³ or less.

The density of the positive electrode active material layer containing the spinel-type positive electrode active material is preferably 2.00 to 4 g/cm³.

### · Other Positive Electrode

The other positive electrode is not particularly limited, but examples thereof include those among the positive electrodes shown below which do not correspond to the specific electrodes.

### <Positive Electrode Active Material>

For example, when the cation is lithium, the layered-rocksalt-type positive electrode active material, the olivine-type positive electrode active material, and the spinel-type positive electrode active material described above, oxides such as TiO₂, V₂O₃, and MoO₃, sulfides such as TiS₂, FeS, and MoS₂, conductive polymers such as polyacetylene, polyparaphenylene, polyaniline, and polypyrrole, activated carbon, radical-generating polymers, or carbon materials may be used as a positive electrode material (positive electrode active material).

For example, when the cation is sodium, sodium-containing transition metal composite oxides such as NaCrO₂, NaFe_{0.3}Co_{0.5}O₂, NaFe_{0.4}Mn_{0.3}Ni_{0.3}O₂, NaNi_{0.5}Ti_{0.3}Mn_{0.2}O₂, NaNi_{1/3}Ti_{1/3}Mn_{1/3}O₂, NaNi_{0.33}Ti_{0.33}Mn_{0.16}Mg_{0.17}O₂, Na_{2/3}Ni_{1/3}Ti_{1/6}Mn_{1/2}O₂, and Na_{2/3}Ni_{1/3}Mn_{2/3}O₂, those in which a plurality of transition metals, such as Co, Mn, and Ni, in the sodium-containing transition metal composite oxides are mixed, those in which a part of the transition metals in the sodium-containing transition metal composite oxides is substituted with a metal other than the transition metals, polyanion type compounds such as NaFePO₄, NaVPO₄F, Na₃V₂(PO₄)₃, and Na₂Fe₂(SO₄)₃, sodium salts of Prussian Blue analogues represented by a compositional formula Na_{α}M⁰⁰¹_{β}[Fe(CN)₆]_{γ} (M⁰⁰¹ represents Cr, Mn, Fe, Co, Ni, Cu, or Zn, 0 ≤ α ≤ 2, 0.5 ≤ 0 ≤ 1.5, and 0.5 ≤ γ ≤ 1.5), oxides such as TiO₂, V₂O₅, and MoO₃, sulfides such as TiS₂, FeS, and MoS₂, conductive polymers such as polyacetylene, polyparaphenylene, polyaniline, and polypyrrole, activated carbon, radical-generating polymers, or carbon materials may be used as a positive electrode material (positive electrode active material).

Regarding the positive electrode current collector and the positive electrode active material layer, the above description can be applied as it is.

### [Method for Producing Electrodes (Positive Electrode and Negative Electrode)]

For example, an electrode can be obtained by dispersing and kneading predetermined blending amounts of an active material, a binder, and, if necessary, an electrically conductive agent in a solvent such as N-methyl-2-pyrrolidone (hereinafter sometimes referred to as "NMP") and water, applying the obtained paste on a current collector and drying to form an active material layer.

The active material layer of the negative electrode and the active material layer of the positive electrode may be highly densified by processing means such as roller pressing. Densities of the active material layer can be variously changed, for example, by changing a condition (pressing force or the like) of the roller pressing.

The density of the electrode active material layer can be calculated from the thickness and the mass of the electrode sheet cut into 5 cm × 5 cm. The thickness of the electrode sheet is measured using a micrometer (coolant proof micrometer MDC-25MX manufactured by Mitutoyo Corporation), and the thickness of the electrode active material layer is determined by subtracting the thickness of the current collector from the measured thickness. The mass of the electrode sheet is weighed with an electronic balance (a top-loading balance MS603TS/A00 manufactured by Mettler Toledo), and the mass of the electrode active material layer is determined by subtracting the mass of the current collector from the measured mass. The density of the electrode active material layer is calculated from the quotient of the mass of the electrode active material layer and the volume of the electrode active material layer.

As the positive electrode and the negative electrode, electrode sheets formed in a sheet shape may be used.

### [Separator]

The nonaqueous electrolyte solution battery of the present disclosure can have a separator. As a separator for preventing contact between the positive electrode and the negative electrode, for example, a nonwoven fabric or a porous sheet made of polyolefin such as polypropylene and polyethylene, cellulose, paper, glass fibers, or the like is used. These films are preferably microporous so that the electrolyte solution easily permeates and the ions easily pass through.

Examples of the polyolefin separator include a film that electrically insulates the positive electrode and the negative electrode and that is permeable to lithium ions, such as microporous polymer films including a porous polyolefin film. As a specific example of the porous polyolefin film, for example, a porous polyethylene film alone or a multilayer film obtained by stacking a porous polyethylene film and a porous polypropylene film may be used. Another example is a film obtained by combining a porous polyethylene film and a polypropylene film.

The nonaqueous electrolyte solution of the present disclosure may be impregnated and held in the separator. The impregnation method is not particularly limited and may be performed by a known method. Specifically, impregnation can be achieved by finally injecting the electrolyte solution into a battery having a positive electrode, a separator, and a negative electrode.

### [Exterior Body]

As the exterior body of the nonaqueous electrolyte solution battery of the present disclosure, for example, a coin-shaped, cylindrical, or square-shaped metal can or a laminated exterior body can be suitably used. Suitable examples of a material for the metal can include nickel-plated steel, stainless steel, nickel-plated stainless steel, aluminum or an alloy thereof, nickel, and titanium. As the laminated exterior body, for example, an aluminum laminated film, a SUS laminated film, or a silica-coated laminated film of polypropylene, polyethylene, or the like can be used.

The configuration of the nonaqueous electrolyte solution battery according to the present embodiment is not particularly limited but can be, for example, a configuration in which electrode elements including a positive electrode and a negative electrode arranged to face each other and the nonaqueous electrolyte solution are included in the exterior body. The shape of the nonaqueous electrolyte solution battery is not particularly limited, but an electrochemical device having a shape such as a coin shape, a cylindrical shape, a square shape, or an aluminum laminate sheet shape is assembled with the above elements.

### 3. Method for Producing Nonaqueous Electrolyte Solution Battery

The method for producing a nonaqueous electrolyte solution battery of the present disclosure is a method for producing a nonaqueous electrolyte solution battery having a step of impregnating at least one of a positive electrode containing a layered-rocksalt-type positive electrode active material and having a positive electrode active material layer with a density of 2.50 g/cm³ or more, a positive electrode containing an olivine-type positive electrode active material and having a positive electrode active material layer with a density of 1.50 g/cm³ or more, a positive electrode containing a spinel-type positive electrode active material and having a positive electrode active material layer with a density of 2.00 g/cm³ or more, a negative electrode containing a graphite negative electrode active material and having a negative electrode active material layer with a density of 1.00 g/cm³ or more, a negative electrode containing Si and/or Si metal oxide and graphite and having a negative electrode active material layer with a density of 1.00 g/cm³ or more, and a negative electrode containing a titanium-containing oxide negative electrode active material and having a negative electrode active material layer with a density of 1.50 g/cm³ or more with a nonaqueous electrolyte solution
in which the nonaqueous electrolyte solution contains
(I) a solute,
(II) a nonaqueous organic solvent, and
(III) a compound represented by the following general formula (1).

[Chem. 6] P(OR)₃ (1)

[In the general formula (1), R's are each independently an alkyl group, a cycloalkyl group, an alkenyl group, an alkynyl group, or an aryl group.]
Regarding the nonaqueous electrolyte solution and the nonaqueous electrolyte solution battery, the above description can be applied as it is.

The wettability with respect to the surface of the specific electrode is improved by the nonaqueous electrolyte solution of the present disclosure. Therefore, in the production of the nonaqueous electrolyte solution battery, the time for impregnating the specific electrode with the nonaqueous electrolyte solution, namely, the time required for the standing step of impregnating the specific electrode after the nonaqueous electrolyte solution is injected into the battery cell is shortened, and the production efficiency of the nonaqueous electrolyte solution battery can be improved.

### Examples

Hereinafter, the present disclosure will be specifically described with Examples, but the present disclosure is not limited by the Examples.

Each compound of (III) used in each Example is shown below.

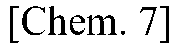

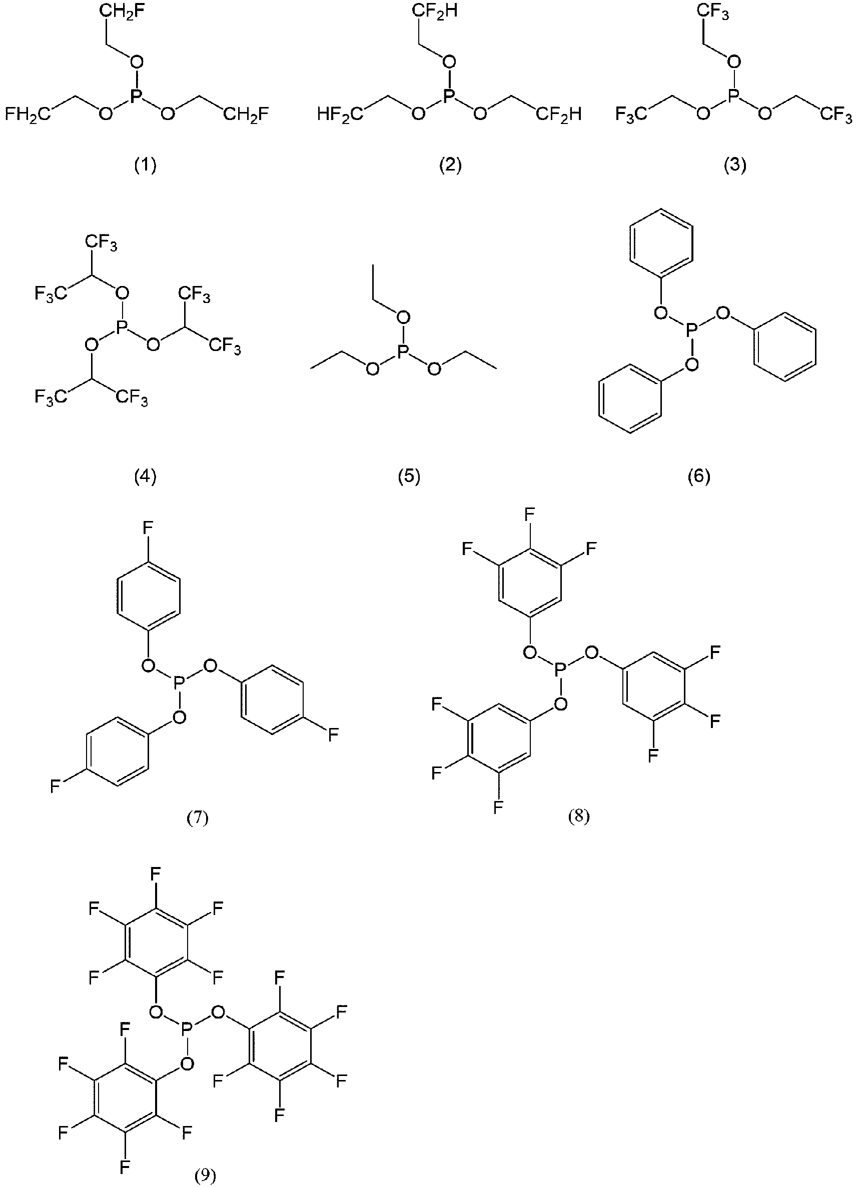

### [Preparation of Nonaqueous Electrolyte Solutions of Examples and Comparative Examples] [Nonaqueous Electrolyte Solution No. 0]

EC, DMC, and EMC were used as the nonaqueous organic solvents and mixed at a volume ratio of EC:DMC:EMC = 3:3:4. Next, LiPF₆ as a solute was added and dissolved so that the content thereof in the nonaqueous electrolyte solution was 1.0 mol/L, to prepare a nonaqueous electrolyte solution No. 0 which was a comparative nonaqueous electrolyte solution.

### [Nonaqueous Electrolyte Solutions Nos. 1 to 6]

The nonaqueous electrolyte solutions (nonaqueous electrolyte solutions Nos. 1 to 3, 4-1 to 4-7, and 5 to 9) shown in Table 1-1 were prepared by the same procedure as the nonaqueous electrolyte solution No. 0 except that the compounds represented by the (III) general formula (1) shown in Table 1-1 (hereinafter, also sometimes referred to as "components (III)") were added and dissolved so that the contents thereof based on the total amount of the nonaqueous electrolyte solution were as shown in Table 1-1 .

### [Production of Layered-Rocksalt-Type Positive Electrode (a-6)]

In 93.0% by mass of Li[Ni_{0.8}Mn_{0.1}Co_{0.1}]O₂ (hereinafter also referred to as "NCM811") powder, 3.0% by mass of polyvinylidene fluoride (hereinafter also referred to as "PVDF") as a binder and 4.0% by mass of acetylene black as a conductive material were mixed, and NMP was further added to produce a positive electrode mixture paste. This paste was applied to both surfaces of an aluminum foil (A1085) and dried, and then roll-pressing was performed so that an active material layer density was 3.55 g/cm³. A layered-rocksalt-type positive electrode a-6 was obtained by punching out a 5 cm × 5 cm piece from the pressed electrode.

### [Production of Layered-Rocksalt-Type Positive Electrodes (a-1 to a-5 and a-7 to a-9) with Various Active Material Layer Densities]

Layered-rocksalt-type positive electrodes a-1 to a-5 and a-7 to a-9 were obtained in the same manner as the layered-rocksalt-type positive electrode a-6, except that the roll-pressing conditions (pressing force) were varied to achieve the respective predetermined active material layer densities shown in Table 1-1.

### [Production of Olivine-Type Positive Electrode (b-3)]

In 91.0% by mass of LiFePO₄ powder, 4.0% by mass of PVDF as a binder and 5.0% by mass of acetylene black as a conductive material were mixed, and NMP was further added to produce a positive electrode mixture paste. This paste was applied to both surfaces of an aluminum foil (A1085) and dried, and then roll pressing was performed so that each active material layer had a density of 2.40 g/cm³. An olivine-type positive electrode b-3 was obtained by punching out a 5 cm × 5 cm piece from the pressed electrode.

### [Production of Olivine-Type Positive Electrodes (b-1, b-2, b-4, and b-5) with Various Active Material Layer Densities]

Olivine-type positive electrodes b-1, b-2, b-4, and b-5 were obtained in the same manner as the olivine-type positive electrode b-3, except that the roll-pressing conditions (pressing force) were varied to achieve the respective predetermined active material layer densities shown in Table 2-1.

### [Production of Spinel-Type Positive Electrode (c-3)]

In 92.0% by mass of LiMn₂O₄ powder, 4.0% by mass of PVDF as a binder and 4.0% by mass of acetylene black as a conductive material were mixed, and NMP was further added to produce a positive electrode mixture paste. This paste was applied to both surfaces of an aluminum foil (A1085) and dried, and then roll pressing was performed so that each active material layer had a density of 3.02 g/cm³. A spinel-type positive electrode c-3 was obtained by punching out a 5 cm × 5 cm piece from the pressed electrode.

### [Production of Spinel-Type Positive Electrodes (c-1, c-2, c-4, and c-5) with Various Active Material Layer Densities]

Spinel-type positive electrodes c-1, c-2, c-4, and c-5 were obtained in the same manner as the spinel-type positive electrode c-3, except that the roll-pressing conditions (pressing force) were varied to achieve the respective predetermined active material layer densities shown in Table 3-1.

### [Production of Graphite Negative Electrode (d-4)]

In 94.5% by mass of artificial graphite powder, 2.0% by mass of acetylene black, 0.5% by mass of carbon nanofibers, 2.0% by mass of styrene-butadiene rubber, and 1.0% by mass of sodium carboxymethyl cellulose were mixed, and water was further added to produce a negative electrode mixture paste. This paste was applied to both surfaces of a copper foil and dried, and then roll pressing was performed so that each active material layer had a density of 1.74 g/cm³. A graphite negative electrode d-4 was obtained by punching out a 5 cm × 5 cm piece from the pressed electrode.

### [Production of Graphite Negative Electrodes (d-1 to d-3, d-5, and d-6) with Various Active Material Layer Densities]

Graphite negative electrodes d-1 to d-3, d-5, and d-6 were obtained in the same manner as the graphite negative electrode d-4, except that the roll-pressing conditions (pressing force) were varied to achieve the respective predetermined active material layer densities shown in Table 4-1.

### [Production of Negative Electrode Containing Si-Containing Negative Electrode Active Material and Graphite (hereinafter, also referred to as "Si-Graphite Negative Electrode") (e-3)]

In 85.0% by mass of artificial graphite powder, 8.0% by mass of SiOx (x = 1), 3.0% by mass of acetylene black, 1.0% by mass of carbon nanofibers, 2.0% by mass of styrene-butadiene rubber, and 1.0% by mass of sodium carboxymethyl cellulose were mixed, and water was further added to produce a negative electrode mixture paste. This paste was applied to both surfaces of a copper foil and dried, and then roll pressing was performed so that each active material layer had a density of 1.69 g/cm³. A Si-graphite negative electrode e-3 was obtained by punching out a 5 cm × 5 cm piece from the pressed electrode.

### [Production of Si-Graphite Negative Electrodes (e-1, e-2, e-4, and e-5) with Various Active Material Layer Densities]

Si-graphite negative electrodes e-1, e-2, e-4, and e-5 were obtained in the same manner as the Si-graphite negative electrode e-3, except that the roll-pressing conditions (pressing force) were varied to achieve the respective predetermined active material layer densities shown in Table 5-1.

### [Production of Titanium-Containing Oxide Negative Electrode (f-3)]

In 91.5% by mass of lithium titanate having a spinel structure (Li₄Ti₅O₁₂; hereinafter also referred to as "LTO"), 4.0% by mass of acetylene black, 0.5% by mass of carbon nanofibers, and 4.0% by mass of PVDF as a binder were mixed, and NMP was further added to produce a negative electrode mixture paste. This paste was applied to both surfaces of a copper foil and dried, and then roll pressing was performed so that each active material layer had a density of 2.31 g/cm³. A titanium-containing oxide negative electrode f-3 was obtained by punching out a 5 cm × 5 cm piece from the pressed electrode.

### [Production of Titanium-Containing Oxide Negative Electrodes (f-1, f-2, f-4, and f-5) with Various Active Material Layer Densities]

Titanium-containing oxide negative electrodes f-1, f-2, f-4, and f-5 were obtained in the same manner as the titanium-containing oxide negative electrode f-3, except that the roll-pressing conditions (pressing force) were varied to achieve the respective predetermined active material layer densities shown in Table 6-1.

### [Example 1-1]

In an environment having a dew point of -45°C, 5 µL of the nonaqueous electrolyte solution No. 1 was dropped on the positive electrode active material (NCN811) layer of the layered-rocksalt-type positive electrode a-6 obtained above at 25°C with a microsyringe (Hamilton syringe 7105 KH), and a video was taken by a camera from above. The droplet areas three seconds after landing and 15 seconds after landing were calculated by binarizing, and the increase of the droplet area was evaluated. The results are shown in Table 1-1 and Table 1-2.

### [Examples and Comparative Examples according to Tables 1-1 to 6-2]

Evaluation was performed in the same manner as in Example 1-1 except that the electrodes and the nonaqueous electrolyte solutions used were changed to those shown in each table. The results are shown in each table.

The increases in the droplet area in the tables show the relative values where the value of Comparative Example 1-1 is regarded as 100 in Table 1-1 and Table 1-2, the value of Comparative Example 2-1 is regarded as 100 in Table 2-1 and Table 2-2, the value of Comparative Example 3-1 is regarded as 100 in Table 3-1 and Table 3-2, the value of Comparative Example 4-1 is regarded as 100 in Table 4-1 and Table 4-2, the value of Comparative Example 5-1 is regarded as 100 in Table 5-1 and Table 5-2, and the value of Comparative Example 6-1 is regarded as 100 in Table 6-1 and Table 6-2.

**[Table 1]**

| Table 1-1 | | | | | | | |
|---|---|---|---|---|---|---|---|
| | Positive Electrode | | | Nonaqueous Electrolyte Solution | | | Wettability; increase in droplet area with respect to positive electrode (relative value) |
| | | | | No. | Component (III) | | |
| | No. | Active Material | Active Material Layer Density [g/cm³] | | Type | Concentration [% by mass] | |
| Example 1-1 | a-6 | | 3.55 | 1 | (1) | 0.50 | 225 |
| Example 1-2-1 | a-1 | | 2.52 | 2 | (2) | 0.50 | 347 |
| Example 1-2-2 | a-2 | | 2.72 | | | | 328 |
| Example 1-2-3 | a-3 | | 2.91 | | | | 310 |
| Example 1-2-4 | a-4 | | 3.10 | | | | 302 |
| Example 1-2-5 | a-5 | | 3.35 | | | | 290 |
| Example 1-2-6 | a-6 | | 3.55 | | | | 282 |
| Example 1-2-7 | a-7 | | 3.77 | | | | 265 |
| Example 1-2-8 | a-8 | | 4.10 | | | | 247 |
| Example 1-2-9 | a-9 | | 4.28 | | | | 232 |
| Example 1-3 | a-6 | | 3.55 | 3 | (3) | 0.50 | 408 |
| Example 1-4-1 | a-6 | | 3.55 | 4-1 | (4) | 0.01 | 121 |
| Example 1-4-2 | | | | 4-2 | | 0.05 | 224 |
| Example 1-4-3 | | | | 4-3 | | 0.20 | 340 |
| Example 1-4-4 | | | | 4-4 | | 0.50 | 523 |
| Example 1-4-5 | | | | 4-5 | | 1.00 | 688 |
| Example 1-4-6 | | | | 4-6 | | 5.00 | 823 |
| Example 1-4-7 | | | | 4-7 | | 10.00 | 917 |
| Example 1-5 | a-6 | | 3.55 | 5 | (5) | 0.50 | 111 |
| Example 1-6 | a-6 | NCM811 | 3.55 | 6 | (6) | 0.50 | 115 |
| Example 1-7 | a-6 | | 3.55 | 7 | (7) | 0.50 | 205 |
| Example 1-8 | a-6 | | 3.55 | 8 | (8) | 0.50 | 393 |
| Example 1-9 | a-6 | | 3.55 | 9 | (9) | 0.50 | 450 |
| Comparative Example 1-1 | a-6 | | 3.55 | 0 (Comparison) | - | 0.00 | 100 |
| Comparative Example 1-2 | a-1 | | 2.52 | | | | 341 |
| Comparative Example 1-3 | a-2 | | 2.72 | | | | 240 |
| Comparative Example 1-4 | a-3 | | 2.91 | | | | 200 |
| Comparative Example 1-5 | a-4 | | 3.10 | | | | 117 |
| Comparative Example 1-6 | a-5 | | 3.35 | | | | 115 |
| Comparative Example 1-7 | a-7 | | 3.77 | | | | 92 |
| Comparative Example 1-8 | a-8 | | 4.10 | | | | 74 |
| Comparative Example 1-9 | a-9 | | 4.28 | | | | 67 |

**[Table 2]**

| Table 1-2 | | | | | | | |
|---|---|---|---|---|---|---|---|
| | Positive Electrode | | | Nonaqueous Electrolyte Solution | | | Wettability; increase in droplet area with respect to positive electrode (relative value) |
| | | | | No. | Component (III) | | |
| | No. | Active Material | Active Material Layer Density [g/cm³] | | Type | Concentration [% by mass] | |
| Example 1-1 | | | | 1 | (1) | 0.50 | 225 |
| Example 1-2-6 | | | | 2 | (2) | 0.50 | 282 |
| Example 1-3 | | | | 3 | (3) | 0.50 | 408 |
| Example 1-4-4 | | | | 4-4 | (4) | 0.50 | 523 |
| Example 1-5 | | | | 5 | (5) | 0.50 | 111 |
| Example 1-6 | a-6 | NCM811 | 3.55 | 6 | (6) | 0.50 | 115 |
| Example 1-7 | | | | 7 | (7) | 0.50 | 205 |
| Example 1-8 | | | | 8 | (8) | 0.50 | 393 |
| Example 1-9 | | | | 9 | (9) | 0.50 | 450 |
| Comparative Example 1-1 | | | | 0 (Comparison) | - | 0.00 | 100 |

**[Table 3]**

| Table 2-1 | | | | | | | |
|---|---|---|---|---|---|---|---|
| | Positive Electrode | | | Nonaqueous Electrolyte Solution | | | Wettability; increase in droplet area with respect to positive electrode (relative value) |
| | | | | No. | Component (III) | | |
| | No. | Active Material | Active Material Layer Density [g/cm³] | | Type | Concentration [% by mass] | |
| Example 2-1 | b-3 | | 2.40 | 1 | (1) | 0.50 | 165 |
| Example 2-2-1 | b-1 | | 1.90 | 2 | (2) | 0.50 | 281 |
| Example 2-2-2 | b-2 | | 2.13 | | | | 248 |
| Example 2-2-3 | b-3 | | 2.40 | | | | 215 |
| Example 2-2-4 | b-4 | | 2.56 | | | | 203 |
| Example 2-2-5 | b-5 | | 2.72 | | | | 183 |
| Example 2-3 | b-3 | | 2.40 | 3 | (3) | 0.50 | 285 |
| Example 2-4-1 | b-3 | | 2.40 | 4-1 | (4) | 0.01 | 120 |
| Example 2-4-2 | | | | 4-3 | | 0.20 | 206 |
| Example 2-4-3 | | | | 4-4 | | 0.50 | 358 |
| Example 2-4-4 | | | | 4-6 | | 5.00 | 488 |
| Example 2-4-5 | | | | 4-7 | | 10.00 | 520 |
| Example 2-5 | b-3 | | 2.40 | 5 | (5) | 0.50 | 114 |
| Example 2-6 | b-3 | LiFePO₄ | 2.40 | 6 | (6) | 0.50 | 117 |
| Example 2-7 | b-3 | | 2.40 | 7 | (7) | 0.50 | 148 |
| Example 2-8 | b-3 | | 2.40 | 8 | (8) | 0.50 | 285 |
| Example 2-9 | b-3 | | 2.40 | 9 | (9) | 0.50 | 324 |
| Comparative Example 2-1 | b-3 | | 2.40 | 0 (Comparison) | - | 0.00 | 100 |
| Comparative Example 2-1-1 | b-1 | | 1.90 | | | | 269 |
| Comparative Example 2-1-2 | b-2 | | 2.13 | | | | 151 |
| Comparative Example 2-1-4 | b-4 | | 2.56 | | | | 87 |
| Comparative Example 2-1-5 | b-5 | | 2.72 | | | | 76 |

**[Table 4]**

| Table 2-2 | | | | | | | |
|---|---|---|---|---|---|---|---|
| | Positive Electrode | | | Nonaqueous Electrolyte Solution | | | Wettability; increase in droplet area with respect to positive electrode (relative value) |
| | | | | No. | Component (III) | | |
| | No. | Active Material | Active Material Layer Density [g/cm³] | | Type | Concentration [% by mass] | |
| Example 2-1 | | | | 1 | (1) | 0.50 | 165 |
| Example 2-2-3 | | | | 2 | (2) | 0.50 | 215 |
| Example 2-3 | | | | 3 | (3) | 0.50 | 285 |
| Example 2-4-3 | | | | 4-4 | (4) | 0.50 | 358 |
| Example 2-5 | | | | 5 | (5) | 0.50 | 114 |
| Example 2-6 | b-3 | LiFePO₄ | 2.40 | 6 | (6) | 0.50 | 117 |
| Example 2-7 | | | | 7 | (7) | 0.50 | 148 |
| Example 2-8 | | | | 8 | (8) | 0.50 | 285 |
| Example 2-9 | | | | 9 | (9) | 0.50 | 324 |
| Comparative Example 2-1 | | | | 0 (Comparison) | - | 0.00 | 100 |

**[Table 5]**

| Table 3-1 | | | | | | | |
|---|---|---|---|---|---|---|---|
| | Positive Electrode | | | Nonaqueous Electrolyte Solution | | | Increase in droplet area with respect to positive electrode (relative value) |
| | | | | No. | Component (III) | | |
| | No. | Active Material | Active Material Layer Density [g/cm³] | | Type | Concentration [% by mass] | |
| Example 3-1 | c-3 | | 3.02 | 1 | (1) | 0.5 | 188 |
| Example 3-2-1 | c-1 | | 2.05 | 2 | (2) | 0.5 | 327 |
| Example 3-2-2 | c-2 | | 2.60 | | | | 291 |
| Example 3-2-3 | c-3 | | 3.02 | | | | 234 |
| Example 3-2-4 | c-4 | | 3.18 | | | | 215 |
| Example 3-2-5 | c-5 | | 3.31 | | | | 190 |
| Example 3-3 | c-3 | | 3.02 | 3 | (3) | 0.5 | 303 |
| Example 3-4-1 | c-3 | | 3.02 | 4-1 | (4) | 0.01 | 121 |
| Example 3-4-2 | | | | 4-3 | | 0.2 | 226 |
| Example 3-4-3 | | | | 4-4 | | 0.5 | 401 |
| Example 3-4-4 | | | | 4-6 | | 5.0 | 493 |
| Example 3-4-5 | | | | 4-7 | | 10.0 | 537 |
| Example 3-5 | c-3 | | 3.02 | 5 | (5) | 0.5 | 110 |
| Example 3-6 | c-3 | LiMn₂O₄ | 3.02 | 6 | (6) | 0.5 | 116 |
| Example 3-7 | c-3 | | 3.02 | 7 | (7) | 0.50 | 166 |
| Example 3-8 | c-3 | | 3.02 | 8 | (8) | 0.50 | 315 |
| Example 3-9 | c-3 | | 3.02 | 9 | (9) | 0.50 | 358 |
| Comparative Example 3-1 | c-3 | | 3.02 | 0 (Comparison) | - | - | 100 |
| Comparative Example 3-1-1 | c-1 | | 2.05 | | | | 318 |
| Comparative Example 3-1-2 | c-2 | | 2.60 | | | | 178 |
| Comparative Example 3-1-4 | c-4 | | 3.18 | | | | 83 |
| Comparative Example 3-1-5 | c-5 | | 3.31 | | | | 75 |

**[Table 6]**

| Table 3-2 | | | | | | | |
|---|---|---|---|---|---|---|---|
| | Positive Electrode | | | Nonaqueous Electrolyte Solution | | | Wettability; increase in droplet area with respect to positive electrode (relative value) |
| | | | | No. | Component (III) | | |
| | No. | Active Material | Active Material Layer Density [g/cm³] | | Type | Concentration [% by mass] | |
| Example 3-1 | | | | 1 | (1) | 0.50 | 188 |
| Example 3-2-3 | | | | 2 | (2) | 0.50 | 234 |
| Example 3-3 | | | | 3 | (3) | 0.50 | 303 |
| Example 3-4-3 | | | | 4-4 | (4) | 0.50 | 401 |
| Example 3-5 | | | | 5 | (5) | 0.50 | 110 |
| Example 3-6 | c-3 | LiMn₂O₄ | 3.02 | 6 | (6) | 0.50 | 116 |
| Example 3-7 | | | | 7 | (7) | 0.50 | 166 |
| Example 3-8 | | | | 8 | (8) | 0.50 | 315 |
| Example 3-9 | | | | 9 | (9) | 0.50 | 358 |
| Comparative Example 3-1 | | | | 0 (Comparison) | - | 0.00 | 100 |

**[Table 7]**

| Table 4-1 | | | | | | | |
|---|---|---|---|---|---|---|---|
| | Negative Electrode | | | Nonaqueous Electrolyte Solution | | | Wettability; increase in droplet area with respect to negative electrode (relative value) |
| | | | | No. | Component (III) | | |
| | No. | Active Material | Active Material Layer Density [g/cm³] | | Type | Concentration [% by mass] | |
| Example 4-1 | d-4 | | 1.74 | 1 | (1) | 0.50 | 268 |
| Example 4-2-1 | d-1 | | 1.10 | 2 | (2) | 0.50 | 420 |
| Example 4-2-2 | d-2 | | 1.38 | | | | 392 |
| Example 4-2-3 | d-3 | | 1.55 | | | | 370 |
| Example 4-2-4 | d-4 | | 1.74 | | | | 317 |
| Example 4-2-5 | d-5 | | 1.92 | | | | 267 |
| Example 4-2-6 | d-6 | | 2.21 | | | | 242 |
| Example 4-3 | d-4 | | 1.74 | 3 | (3) | 0.50 | 389 |
| Example 4-4-1 | d-4 | | 1.74 | 4-1 | (4) | 0.01 | 117 |
| Example 4-4-2 | | | | 4-2 | | 0.05 | 212 |
| Example 4-4-3 | | | | 4-3 | | 0.20 | 311 |
| Example 4-4-4 | | | | 4-4 | | 0.50 | 467 |
| Example 4-4-5 | | | | 4-5 | | 1.00 | 601 |
| Example 4-4-6 | | | | 4-6 | | 5.00 | 759 |
| Example 4-4-7 | | | | 4-7 | | 10.00 | 802 |
| Example 4-5 | d-4 | Graphite | 1.74 | 5 | (5) | 0.50 | 107 |
| Example 4-6 | d-4 | | 1.74 | 6 | (6) | 0.50 | 111 |
| Example 4-7 | d-4 | | 1.74 | 7 | (7) | 0.50 | 164 |
| Example 4-8 | d-4 | | 1.74 | 8 | (8) | 0.50 | 316 |
| Example 4-9 | d-4 | | 1.74 | 9 | (9) | 0.50 | 361 |
| Comparative Example 4-1 | d-4 | | 1.74 | 0 (Comparison) | - | 0.00 | 100 |
| Comparative Example 4-2 | d-1 | | 1.10 | | | | 411 |
| Comparative Example 4-3 | d-2 | | 1.38 | | | | 240 |
| Comparative Example 4-4 | d-3 | | 1.55 | | | | 168 |
| Comparative Example 4-5 | d-5 | | 1.92 | | | | 81 |
| Comparative Example 4-6 | d-6 | | 2.21 | | | | 69 |

**[Table 8]**

| Table 4-2 | | | | | | | |
|---|---|---|---|---|---|---|---|
| | Negative Electrode | | | Nonaqueous Electrolyte Solution | | | Wettability; increase in droplet area with respect to negative electrode (relative value) |
| | | | | No. | Component (III) | | |
| | No. | Active Material | Active Material Layer Density [g/cm³] | | Type | Concentration [% by mass] | |
| Example 4-1 | | | | 1 | (1) | 0.50 | 268 |
| Example 4-2-4 | | | | 2 | (2) | 0.50 | 317 |
| Example 4-3 | | | | 3 | (3) | 0.50 | 389 |
| Example 4-4-4 | | | | 4-4 | (4) | 0.50 | 467 |
| Example 4-5 | | | | 5 | (5) | 0.50 | 107 |
| Example 4-6 | d-4 | Graphite | 1.74 | 6 | (6) | 0.50 | 111 |
| Example 4-7 | | | | 7 | (7) | 0.50 | 164 |
| Example 4-8 | | | | 8 | (8) | 0.50 | 316 |
| Example 4-9 | | | | 9 | (9) | 0.50 | 361 |
| Comparative Example 4-1 | | | | 0 (Comparison) | - | 0.00 | 100 |

**[Table 9]**

| Table 5-1 | | | | | | | |
|---|---|---|---|---|---|---|---|
| | Negative Electrode | | | Nonaqueous Electrolyte Solution | | | Wettability; increase in droplet area with respect to negative electrode (relative value) |
| | | | | No. | Component (III) | | |
| | No. | Active Material | Active Material Layer Density [g/cm³] | | Type | Concentration [% by mass] | |
| Example 5-1 | e-3 | | 1.69 | 1 | (1) | 0.50 | 246 |
| Example 5-2-1 | e-1 | | 1.13 | 2 | (2) | 0.50 | 410 |
| Example 5-2-2 | e-2 | | 1.35 | | | | 375 |
| Example 5-2-3 | e-3 | | 1.69 | | | | 310 |
| Example 5-2-4 | e-4 | | 1.89 | | | | 261 |
| Example 5-2-5 | e-5 | | 2.09 | | | | 227 |
| Example 5-3 | e-3 | | 1.69 | 3 | (3) | 0.50 | 374 |
| Example 5-4-1 | e-3 | | 1.69 | 4-1 | (4) | 0.01 | 116 |
| Example 5-4-3 | | | | 4-3 | | 0.20 | 295 |
| Example 5-4-4 | | | | 4-4 | | 0.50 | 458 |
| Example 5-4-6 | | | | 4-6 | | 5.00 | 750 |
| Example 5-4-7 | | | | 4-7 | | 10.00 | 789 |
| Example 5-5 | e-3 | SiO-Graphite | 1.69 | 5 | (5) | 0.50 | 104 |
| Example 5-6 | e-3 | | 1.69 | 6 | (6) | 0.50 | 108 |
| Example 5-7 | e-3 | | 1.69 | 7 | (7) | 0.50 | 205 |
| Example 5-8 | e-3 | | 1.69 | 8 | (8) | 0.50 | 393 |
| Example 5-9 | e-3 | | 1.69 | 9 | (9) | 0.50 | 450 |
| Comparative Example 5-1 | e-3 | | 1.69 | 0 (Comparison) | - | 0.00 | 100 |
| Comparative Example 5-2 | e-1 | | 1.13 | | | | 399 |
| Comparative Example 5-3 | e-2 | | 1.35 | | | | 229 |
| Comparative Example 5-4 | e-4 | | 1.89 | | | | 71 |
| Comparative Example 5-5 | e-5 | | 2.09 | | | | 61 |

**[Table 10]**

| Table 5-2 | | | | | | | |
|---|---|---|---|---|---|---|---|
| | Negative Electrode | | | Nonaqueous Electrolyte Solution | | | Wettability; increase in droplet area with respect to negative electrode (relative value) |
| | | | | No. | Comionent (III) | | |
| | No. | Active Material | Active Material Layer Density [g/cm³] | | Type | Concentration [% by mass] | |
| Example 5-1 | | | | 1 | (1) | 0.50 | 246 |
| Example 5-2-3 | | | | 2 | (2) | 0.50 | 310 |
| Example 5-3 | | | | 3 | (3) | 0.50 | 374 |
| Example 5-4-4 | | | | 4-4 | (4) | 0.50 | 458 |
| Example 5-5 | | SiO-Graphite | | 5 | (5) | 0.50 | 104 |
| Example 5-6 | e-3 | | 1.69 | 6 | (6) | 0.50 | 108 |
| Example 5-7 | | | | 7 | (7) | 0.50 | 205 |
| Example 5-8 | | | | 8 | (8) | 0.50 | 393 |
| Example 5-9 | | | | 9 | (9) | 0.50 | 450 |
| Comparative Example 5-1 | | | | 0 (Comparison) | - | 0.00 | 100 |

**[Table 11]**

| Table 6-1 | | | | | | | |
|---|---|---|---|---|---|---|---|
| | Negative Electrode | | | Nonaqueous Electrolyte Solution | | | Wettability; increase in droplet area with respect to negative electrode (relative value) |
| | | | | No. | Component (III) | | |
| | No. | Active Material | Active Material Layer Density [g/cm³] | | Type | Concentration [% by mass] | |
| Example 6-1 | f-3 | | 2.31 | 1 | (1) | 0.50 | 211 |
| Example 6-2-1 | f-1 | | 1.77 | 2 | (2) | 0.50 | 330 |
| Example 6-2-2 | f-2 | | 1.99 | | | | 280 |
| Example 6-2-3 | f-3 | | 2.31 | | | | 232 |
| Example 6-2-4 | f-4 | | 2.44 | | | | 166 |
| Example 6-2-5 | f-5 | | 2.62 | | | | 128 |
| Example 6-3 | f-3 | | 2.31 | 3 | (3) | 0.50 | 299 |
| Example 6-4-1 | f-3 | | 2.31 | 4-1 | (4) | 0.01 | 123 |
| Example 6-4-3 | | | | 4-3 | | 0.20 | 196 |
| Example 6-4-4 | | | | 4-4 | | 0.50 | 383 |
| Example 6-4-6 | | | | 4-6 | | 5.00 | 654 |
| Example 6-4-7 | | | | 4-7 | | 10.00 | 691 |
| Example 6-5 | f-3 | LTO | 2.31 | 5 | (5) | 0.50 | 105 |
| Example 6-6 | f-3 | | 2.31 | 6 | (6) | 0.50 | 112 |
| Example 6-7 | f-3 | | 2.31 | 7 | (7) | 0.50 | 167 |
| Example 6-8 | f-3 | | 2.31 | 8 | (8) | 0.50 | 318 |
| Example 6-9 | f-3 | | 2.31 | 9 | (9) | 0.50 | 364 |
| Comparative Example 6-1 | f-3 | | 2.31 | 0 (Comparison) | - | 0.00 | 100 |
| Comparative Example 6-2 | f-1 | | 1.77 | | | | 313 |
| Comparative Example 6-3 | f-2 | | 1.99 | | | | 151 |
| Comparative Example 6-4 | f-4 | | 2.44 | | | | 65 |
| Comparative Example 6-5 | f-5 | | 2.62 | | | | 49 |

**[Table 12]**

| Table 6-2 | | | | | | | |
|---|---|---|---|---|---|---|---|
| | Negative Electrode | | | Nonaqueous Electrolyte Solution | | | Wettability; increase in droplet area with respect to negative electrode (relative value) |
| | | | | No. | Component (III) | | |
| | No. | Active Material | Active Material Layer Density [g/cm³] | | Type | Concentration [% by mass] | |
| Example 6-1 | | | | 1 | (1) | 0.50 | 211 |
| Example 6-2-3 | | | | 2 | (2) | 0.50 | 232 |
| Example 6-3 | | | | 3 | (3) | 0.50 | 299 |
| Example 6-4-4 | | | | 4-4 | (4) | 0.50 | 383 |
| Example 6-5 | | | | 5 | (5) | 0.50 | 105 |
| Example 6-6 | f-3 | LTO | 2.31 | 6 | (6) | 0.50 | 112 |
| Example 6-7 | | | | 7 | (7) | 0.50 | 167 |
| Example 6-8 | | | | 8 | (8) | 0.50 | 318 |
| Example 6-9 | | | | 9 | (9) | 0.50 | 364 |
| Comparative Example 6-1 | | | | 0 (Comparison) | - | 0.00 | 100 |

From the results of Table 1-1 to Table 6-2, it was found that, when the nonaqueous electrolyte solutions of the present disclosure containing the component (III) were used, the wettability with respect to the electrode surface was improved as compared with the cases using the comparative nonaqueous electrolyte solutions not containing the component (III).

From Table 1-2, Table 2-2, Table 3-2, Table 4-2, Table 5-2, and Table 6-2, it was found that the wettability was further improved using the compounds (1) to (4) and (7) to (9) of the components (III).

### INDUSTRIAL APPLICABILITY

According to the present disclosure, a nonaqueous electrolyte solution capable of improving the wettability of the nonaqueous electrolyte solution on the surface of an electrode even when used in a nonaqueous electrolyte solution battery having an electrode configuration including an electrode having an active material layer with a density of a specified value or higher, a nonaqueous electrolyte solution battery having the electrode and the nonaqueous electrolyte solution, and a method for producing the nonaqueous electrolyte solution battery can be provided.

Although the present disclosure has been explained in detail and with reference to specific embodiments, it will be apparent to a person skilled in the art that various changes and modifications can be made without departing from the spirit and the scope of the present disclosure.

The present application is based on a Japanese Patent Application (No. 2024-028752) filed on February 28, 2024, the contents of which are incorporated herein by reference.

## Claims

1. A nonaqueous electrolyte solution for a nonaqueous electrolyte solution battery having at least one of the following:
a positive electrode containing a layered-rocksalt-type positive electrode active material and having a positive electrode active material layer with a density of 2.50 g/cm³ or more;
a positive electrode containing an olivine-type positive electrode active material and having a positive electrode active material layer with a density of 1.50 g/cm³ or more;
a positive electrode containing a spinel-type positive electrode active material and having a positive electrode active material layer with a density of 2.00 g/cm³ or more;
a negative electrode containing a graphite negative electrode active material and having a negative electrode active material layer with a density of 1.00 g/cm³ or more;
a negative electrode containing a Si-containing negative electrode active material and graphite and having a negative electrode active material layer with a density of 1.00 g/cm³ or more; or
a negative electrode containing a titanium-containing oxide negative electrode active material and having a negative electrode active material layer with a density of 1.50 g/cm³ or more,
wherein the nonaqueous electrolyte solution comprises:
(I) a solute;
(II) a nonaqueous organic solvent; and
(III) a compound represented by the following general formula (1):
[Chem. 1] P(OR)₃ (1)
[wherein, in the general formula (1), R's are each independently an alkyl group, a cycloalkyl group, an alkenyl group, an alkynyl group, or an aryl group.]

2. The nonaqueous electrolyte solution according to claim 1, wherein the nonaqueous electrolyte solution battery comprises at least one of the following:
a positive electrode containing a layered-rocksalt-type positive electrode active material and having a positive electrode active material layer with a density of 2.50 to 5 g/cm³;
a positive electrode containing an olivine-type positive electrode active material and having a positive electrode active material layer with a density of 1.50 to 3 g/cm³;
a positive electrode containing a spinel-type positive electrode active material and having a positive electrode active material layer with a density of 2.00 to 4 g/cm³;
a negative electrode containing a graphite negative electrode active material and having a negative electrode active material layer with a density of 1.00 to 3 g/cm³;
a negative electrode containing a Si-containing negative electrode active material and graphite and having a negative electrode active material layer with a density of 1.00 to 3 g/cm³; or
a negative electrode containing a titanium-containing oxide negative electrode active material and having a negative electrode active material layer with a density of 1.50 to 3 g/cm³.

3. The nonaqueous electrolyte solution according to claim 1, wherein R in the general formula (1) is an alkyl group having a fluorine atom.

4. The nonaqueous electrolyte solution according to claim 1, wherein a content of the (III) is 0.015 to 9% by mass based on a total amount of the nonaqueous electrolyte solution.

5. The nonaqueous electrolyte solution according to claim 1, wherein the (III) is at least one selected from the group consisting of tris(1,1,1,3,3,3-hexafluoro-2-propyl) phosphite, tris(2,2,2-trifluoroethyl) phosphite, tris(2,2-difluoroethyl) phosphite, and tris(2-fluoroethyl) phosphite.

6. The nonaqueous electrolyte solution according to claim 1, wherein the (I) is at least one selected from the group consisting of LiPF₆, LiBF₄, LiSbF₆, LiAsF₆, LiClO₄, LiN(FSO₂)₂, LiAlO₂, LiAlCl₄, LiCl, and LiI.

7. The nonaqueous electrolyte solution according to claim 1, wherein the (I) is at least one selected from the group consisting of NaPF₆, NaBF₄, NaSbF₆, NaAsF₆, NaClO₄, NaN(FSO₂)₂, NaAlO₂, NaAlCl₄, NaCl, and Nal.

8. The nonaqueous electrolyte solution according to claim 1, wherein the (II) comprises at least one selected from the group consisting of a cyclic ester, an acyclic ester, a cyclic ether, an acyclic ether, a sulfone compound, a sulfoxide compound, and an ionic liquid.

9. The nonaqueous electrolyte solution according to claim 8, wherein the cyclic ester comprises a cyclic carbonate.

10. The nonaqueous electrolyte solution according to claim 9, wherein the cyclic carbonate comprises at least one selected from the group consisting of ethylene carbonate and propylene carbonate.

11. The nonaqueous electrolyte solution according to claim 8, wherein the acyclic ester comprises an acyclic carbonate.

12. The nonaqueous electrolyte solution according to claim 11, wherein the acyclic carbonate comprises at least one selected from the group consisting of ethyl methyl carbonate, dimethyl carbonate, diethyl carbonate, and methyl propyl carbonate.

13. The nonaqueous electrolyte solution according to claim 8, wherein the cyclic ether comprises at least one selected from the group consisting of tetrahydrofuran, 2-methyltetrahydrofuran, furan, tetrahydropyran, 1,3-dioxane, 1,4-dioxane, 1,3-dioxolane, and trioxane.

14. The nonaqueous electrolyte solution according to claim 8, wherein the acyclic ether comprises at least one selected from the group consisting of diethyl ether, dipropyl ether, diisopropyl ether, dibutyl ether, dimethoxymethane, trimethoxymethane, 1,2-dimethoxyethane, diethoxyethane, diethylene glycol dimethyl ether, triethylene glycol dimethyl ether, and tetraethylene glycol dimethyl ether.

15. The nonaqueous electrolyte solution according to claim 1, further comprising at least one selected from the group consisting of cyclohexylbenzene, cyclohexyl fluorobenzene, biphenyl, 2-fluorobiphenyl, tert-butylbenzene, tert-amylbenzene, 2-fluorotoluene, fluorobenzene, difluoroanisole, vinylene carbonate, an oligomer of vinylene carbonate (a number-average molecular weight in terms of polystyrene of 170 to 5,000), vinylethylene carbonate, divinylethylene carbonate, fluoroethylene carbonate, ethynyl ethylene carbonate, trans-difluoroethylene carbonate, methyl propargyl carbonate, ethyl propargyl carbonate, dipropargyl carbonate, dimethyl vinylene carbonate, dimethyl dicarbonate, bis(1,1,1,3,3,3-hexafluoro-1-propyl) carbonate, bis(2,2,2-trifluoroethyl) carbonate, 1,6-diisocyanatohexane, maleic anhydride, succinic anhydride, 1,4-dioxane-2,6-dione, glutaric anhydride, methanedisulfonic anhydride, 1,2-ethanedisulfonic anhydride, methanesulfonic anhydride, 2-sulfobenzoic anhydride, 1,3-propanedisulfonic anhydride, 1,3-propanesultone, 1,3-propenesultone, 1,4-butanesultone, 2,4-butanesultone, 1,3,2-dioxathiolane-2,2-dioxide, 4-propyl-1,3,2-dioxathiolane-2,2-dioxide, 1,3-dithiolane-1,1,3,3-tetraoxide, 1,3-dithiane-1,1,3,3-tetraoxide, 1,2-oxathiolan-5-one-2,2-dioxide, methylene methanedisulfonate, dimethylene methanedisulfonate, trimethylene methanedisulfonate, methyl methanesulfonate, methanesulfonyl fluoride, ethenesulfonyl fluoride, N,N'-carbonylbis(N-methylsulfamoyl fluoride), difluoro(picolinato)borate, phenyl difluorophosphate, tripropargyl phosphate, tetrafluoro(picolinato)phosphate, (ethoxy)pentafluorocyclotriphosphazene, succinonitrile, methyldifluorovinylsilane, methylfluorodivinylsilane, dimethyldivinylsilane, trivinylmethylsilane, trivinylfluorosilane, tetravinylsilane, tris(trimethylsilyl)borate, tris(trimethylsilyl)phosphate, 1,3-dimethyl-1,3-divinyl-1,3-di(1,1,1,3,3,3-hexafluoroisopropyl)disiloxane, a fluorosulfonate salt, a trifluoromethanesulfonate salt, a pentafluoroethanesulfonate salt, a nonafluorobutanesulfonate salt, a monomethyl sulfate salt, a monoethyl sulfate salt, a bis(trifluoromethanesulfonyl)imide salt, a bis(pentafluoroethanesulfonyl)imide salt, a (trifluoromethanesulfonyl)(nonafluorobutanesulfonyl)imide salt, a (trifluoromethanesulfonyl)(pentafluoroethanesulfonyl)imide salt, a (trifluoromethanesulfonyl)(fluorosulfonyl)imide salt, a (pentafluoroethanesulfonyl)(fluorosulfonyl)imide salt, a (difluorophosphoryl)(fluorosulfonyl)imide salt, a (difluorophosphoryl)(trifluoromethanesulfonyl)imide salt, a bis(difluorophosphoryl)imide salt, (fluorosulfonyl)(lithium carbonyloxymethanesulfonate)imide, a (fluorosulfonyl)(carbonyldi(2-propenyl)phosphoryl)imide salt, a (carbonyldi(propargyl)phosphoryl)imide salt, a monofluorophosphate salt, a difluorophosphate salt, a tetrafluoro(malonato)phosphate salt, a tris(oxalato)phosphate salt, a difluorobis(oxalato)phosphate salt, a tetrafluorooxalatophosphate salt, a bis(oxalato)borate salt, a difluorooxalatoborate salt, a difluoro(malonato)borate salt, a tris(trifluoromethanesulfonyl)methide salt, a tris(fluorosulfonyl)methide salt, an acrylate salt, a methacrylate salt, a nitrate salt, a nitrite salt, hexafluoroisopropanol, and trifluoroethanol.

16. A nonaqueous electrolyte solution battery comprising at least the following:
a positive electrode;
a negative electrode; and
the nonaqueous electrolyte solution according to any one of claims 1 to 15,
wherein at least one of the positive electrode or the negative electrode is one of the following electrodes:
a positive electrode containing a layered-rocksalt-type positive electrode active material and having a positive electrode active material layer with a density of 2.50 g/cm³ or more;
a positive electrode containing an olivine-type positive electrode active material and having a positive electrode active material layer with a density of 1.50 g/cm³ or more;
a positive electrode containing a spinel-type positive electrode active material and having a positive electrode active material layer with a density of 2.00 g/cm³ or more;
a negative electrode containing a graphite negative electrode active material and having a negative electrode active material layer with a density of 1.00 g/cm³ or more;
a negative electrode containing a Si-containing negative electrode active material and graphite and having a negative electrode active material layer with a density of 1.00 g/cm³ or more; or
a negative electrode containing a titanium-containing oxide negative electrode active material and having a negative electrode active material layer with a density of 1.50 g/cm³ or more.

17. A method for producing a nonaqueous electrolyte solution battery, the method comprising:
a step of impregnating, with a nonaqueous electrolyte solution, at least one of the following electrodes:
a positive electrode containing a layered-rocksalt-type positive electrode active material and having a positive electrode active material layer with a density of 2.50 g/cm³ or more;
a positive electrode containing an olivine-type positive electrode active material and having a positive electrode active material layer with a density of 1.50 g/cm³ or more;
a positive electrode containing a spinel-type positive electrode active material and having a positive electrode active material layer with a density of 2.00 g/cm³ or more;
a negative electrode containing a graphite negative electrode active material and having a negative electrode active material layer with a density of 1.00 g/cm³ or more;
a negative electrode containing a Si-containing negative electrode active material and graphite and having a negative electrode active material layer with a density of 1.00 g/cm³ or more; or
a negative electrode containing a titanium-containing oxide negative electrode active material and having a negative electrode active material layer with a density of 1.50 g/cm³ or more,
wherein the nonaqueous electrolyte solution comprises:
(I) a solute;
(II) a nonaqueous organic solvent; and
(III) a compound represented by the following general formula (1):
[Chem. 2] P(OR)₃ (1)
[wherein, in the general formula (1), R's are each independently an alkyl group, a cycloalkyl group, an alkenyl group, an alkynyl group, or an aryl group.]
